# EUROPEAN PATENT APPLICATION

(11) **EP 4 507 393 A1**
(43) Date of publication of application: **12.02.2025**
(21) Application number: 23190961.5
(22) Date of filing: 10.08.2023
(51) Int. Cl.: H04W 52/02

(54) **LOW POWER WAKE UP SIGNAL OR SYNCHRONIZATION SIGNAL ACTIVATION AND DEACTIVATION**

(71) Applicant: Panasonic Intellectual Property Corporation of America, Torrance, CA 90504 (US)
(72) Inventor: LI, Hongchao, 63225 Langen (DE); SUZUKI, Hidetoshi, Osaka 571-8501 (JP)
(74) Representative: Grünecker Patent- und Rechtsanwälte PartG mbB

(57) **Abstract**

The present disclosure relates to a communication device, a scheduling device and respective methods for a communication device and a scheduling device. For example, the communication device comprises a transceiver and circuitry. The transceiver receives a control signalling, and the circuitry obtains from the control signalling one or more of: (i) an indication indicating activation or deactivation of a low-power signal related to a low-power radio, LR, operation, and (ii) an indication indicating a resource of the low-power signal. The low-power signal is: (i) a low-power wake-up signal, LP-WUS, indicating whether the communication device is to stop the LR operation; or (ii) a low-power synchronization signal, LP-SS, to be monitored by the communication device when performing the LR operation.

## Description

### BACKGROUND

### 1. Technical field

The present disclosure relates to transmission and reception of signals in communication systems, such as 3GPP communication systems. In particular, the present disclosure relates to methods and apparatuses for such transmission and reception.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE and NR, further improvements and options may facilitating efficient operation of the communication system as well as particular devices pertaining to the system.

### SUMMARY

One non-limiting and exemplary embodiment facilitates reduction of UE and network power consumption in connection with low-power radio (LR) operation of UE(s).

In an embodiment, the techniques disclosed here feature an apparatus (e.g. a user equipment, (UE)). The apparatus comprises a transceiver and circuitry. The transceiver, in operation, receives a control signalling. The circuitry, in operation, obtains from the control signalling one or more of: (i) an indication indicating activation or deactivation of a low-power signal related to a low-power radio (LR) operation, and (ii) an indication indicating a resource of the low-power signal. The low-power signal is: (i) a low-power wake-up signal, LP-WUS, indicating whether the communication device is to stop the LR operation; or (ii) a low-power synchronization signal, LP-SS, to be monitored by the communication device when performing the LR operation.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system;
- **Fig. 2**: is a schematic drawing that shows a functional split between NG-RAN and 5GC;
- **Fig. 3**: is a sequence diagram for RRC connection setup/reconfiguration procedures;
- **Fig. 4**: is a schematic drawing showing usage scenarios of Enhanced mobile broadband (eMBB), Massive Machine Type Communications (mMTC) and Ultra Reliable and Low Latency Communications (URLLC);
- **Fig. 5**: is a block diagram showing an exemplary 5G system architecture for a non-roaming scenario;
- **Fig. 6**: is a block diagram of a communication system including a user equipment and a base station with their respective exemplary functional structures;
- **Fig. 7**: is a block diagram illustrating an exemplary functional structure of the processing circuitry at the user equipment side;
- **Fig. 8**: is a block diagram illustrating an exemplary functional structure of the processing circuitry at the base station side;
- **Fig. 9**: is a flow chart illustrating exemplary steps performed by the user equipment as well as exemplary steps performed by the base station;
- **Fig. 10**: is a schematic drawing illustrating possible information/message exchange between UE, gNB(s) and the CN.

### DETAILED DESCRIPTION

### 5G NR system architecture and protocol stacks

3GPP has been working at the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

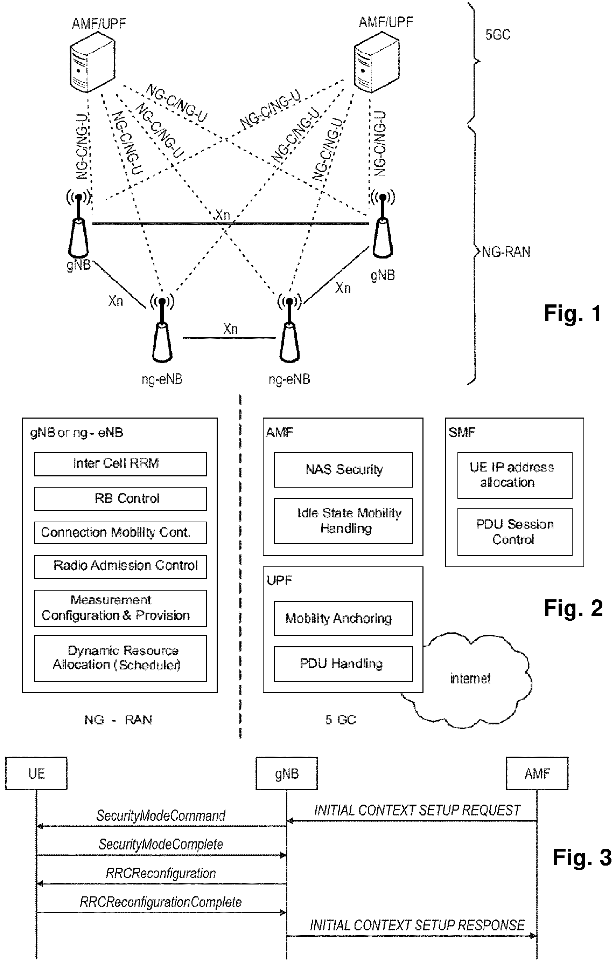

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SOAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v15.6.0 or e.g. v16.2.0, section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

Comparing to LTE numerology (subcarrier spacing and symbol length), NR supports multiple different types of subcarrier spacing, labeled by a parameter *µ* (in LTE there is only a 15 kHz subcarrier spacing, corresponding to *µ* = 0 in NR). The types NR numerology is summarized in 3GPP TS 38.211, v 15.7.0.

### 5G NR functional split between NG-RAN and 5GC

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

**Fig. 3** illustrates some interactions between a UE, gNB, and AMF (a 5GC entity) in the context of a transition of the UE from RRC_IDLE to RRC_CONNECTED for the NAS part (see e.g. TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for exampleAMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### Usage Scenarios of IMT for 2020 and beyond

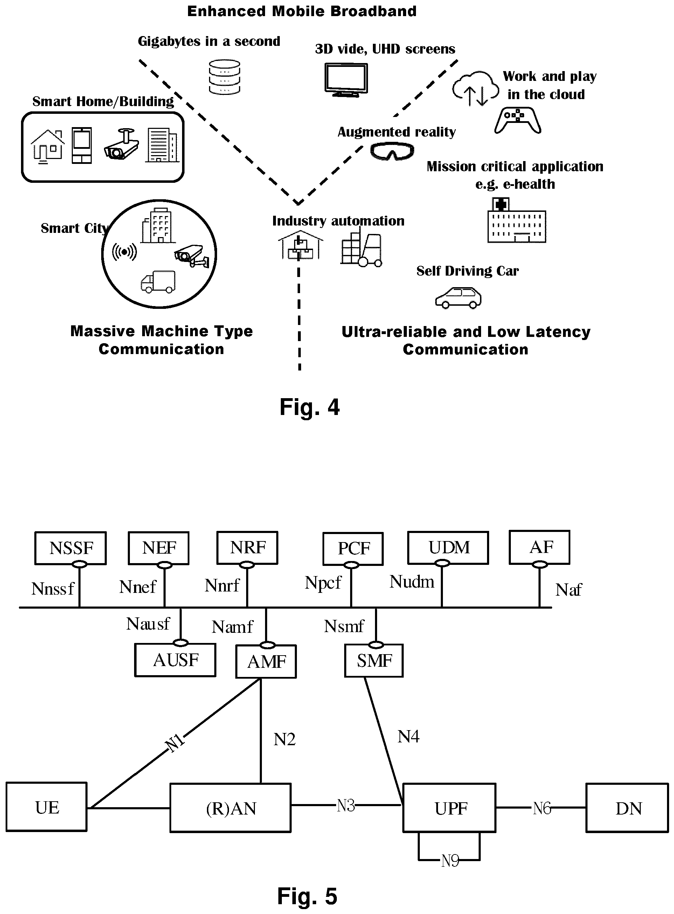

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.2083 Fig. 2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁻⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 5** illustrates a 5G NR non-roaming reference architecture (see TS 23.501 v16.1.0, section 4.23). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

**Fig. 5** shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMMB and mMTC services to at least one of functions (for example NEF, AMF, SMF, PCF,UPF, etc) of the 5GC to establish a PDU session including a radio bearer between a gNodeB and a UE in accordance with the QoS requirement and control circuitry, which, in operation, performs the services using the established PDU session.

### Control Signals

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sildelink control information (SCI) or the 2nd stage SCI.

### Uplink/Downlink/Sidelink

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### Data Channels/Control Channels

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### Reference Signals

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### Time Intervals

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the described embodiment(s), and may be other numbers of symbols.

### Frequency Bands

The present disclosure may be applied to any of a licensed band and an unlicensed band.

### Communication

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### Antenna Ports

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### Downlink control channel monitoring, PDCCH, DCI

Many of the functions operated by the UE involve the monitoring of a downlink control channel (e.g. the PDCCH, see 3GPP TS 38.300 v15.6.0, section 5.2.3) to receive e.g. particular control information or data destined to the UE.

A non-exhaustive list of these functions is given in the following:
- a paging message monitoring function,
- a system information acquisition function,
- signalling monitoring operation for a Discontinued Reception, DRX, function,
- inactivity monitoring operation for a Discontinued Reception, DRX, function,
- random access response reception for a random access function,
- reordering function of a Packet Data Convergence Protocol, PDCP, layer.

As mentioned above, the PDCCH monitoring is done by the UE so as to identify and receive information intended for the UE, such as the control information as well as the user traffic (e.g. the DCI on the PDCCH, and the user data on the PDSCH indicated by the PDCCH).

Control information in the downlink (can be termed downlink control information, DCI) has the same purpose in 5G NR as the DCI in LTE, namely being a special set of control information that e.g. schedules a downlink data channel (e.g. the PDSCH) or an uplink data channel (e.g. PUSCH). In 5G NR there are a number of different DCI Formats defined already (see TS 38.212 v15.6.0 section 7.3.1).

Said DCI formats represent predetermined formats in which respective information is formed and transmitted. In particular, DCI formats 0_1 and 1_1 are used for scheduling PUSCH and PDSCH, respectively, in one cell.

The PDCCH monitoring of each of these functions serves a particular purpose and is thus started to said end. The PDCCH monitoring is typically controlled at least based on a timer, operated by the UE. The timer has the purpose of controlling the PDCCH monitoring, e.g. limiting the maximum amount of time that the UE is to monitor the PDCCH. For instance, the UE may not need to indefinitely monitor the PDCCH, but may stop the monitoring after some time so as to be able to save power.

As mentioned above, one of the purposes of DCI on the PDCCH is the dynamic scheduling of resources in downlink or uplink or even sidelink. In particular, some formats of DCI are provided to carry indication of resources (resource allocation, RA) allocated to a data channel for a particular user. The resource allocation may include specification of resources in frequency domain and/or time domain.

### Physical Resource Block

In general, the term "*physical resource block*" (PRB) refers to the smallest allocable resource unit usable for (user) data transmission. In LTE and NR, a PRB has a predetermined number (e.g. 12) of consecutive subcarriers in frequency domain and a predetermined number of symbols in time domain (e.g. 14 OFDM symbols in LTE).

### Further Improvements - Power saving

A new study item has been started within 3GPP, aiming at studying and evaluating low-power wake-up receiver (LP-WUR) architectures and low-power wake-up signal (LP-WUS) designs to support wake-up receivers. One of the targets is to achieve a substantial UE power saving gain. A report capturing this study item is available at http://www.3gpp.org and titled "Low-power Wake-up Signal and Receiver for NR as a Rel.18 SI topic" with contribution number RP-221271 from 3GPP TSG RAN meeting #96 in Hungary, June 6- 9, 2022.

In the RAN1#113 meeting, below agreement was achieved, which directs to the optimization of RRM measurement offloading to the Low power Radio (LR) operation:
- For idle/inactive mode, study offloading of RRM measurement of serving cell to LP-WUR under certain conditions, if any, and relaxation of serving/neighboring cell RRM measurements in MR considering
   - Periodic reference signal(s) is/are used for LR measurements.
      - FFS: reference signal(s) to measure, e.g. PSS/SSS/PBCH DMRS, LP-WUS waveform sequence, LP-SS
      - FFS: periodicity, content
   - MR performs measurements
      - Alt2: with relaxed periodicity if RRM measurement in MR is relaxed.
         ▪ FFS: conditions for relaxation if any
         ▪ Can apply for both neighboring and serving cell
      - Alt 3: only when reference signal(s) based measurements by LP-WUR satisfy certain condition(s), e.g. are below threshold.
         ▪ FFS: threshold.
         ▪ Above MR measurement under certain conditions can apply for both neighboring cell and serving cell
         ▪ Potentially with relaxation methods for MR neighboring cell measurement
   - Other alternatives are not precluded

FFS: Feasibility of RRM measurements of neighbor cells by LP-WUR

Accordingly, power consumption depends on the configured length of wake-up periods, e.g., paging cycle. To meet the battery life requirements, eDRX (extended Discontinuous Reception) cycle with large value is expected to be used, resulting in high latency, which may not be suitable for such services with requirements of both long battery life and low latency. Especially for latency-critical use cases, eDRX is not suitable.

### Wake-up signal (WUS)

Currently, UEs need to periodically wake up once per DRX cycle, which dominates the power consumption in periods with no signaling or data traffic. DRX is used in RRC idle mode when monitoring for paging messages. Accordingly, a UE does not have to monitor all PDCCH transmission opportunities, but rather only the paging occasions, and can thus better preserve battery power. In connected mode, DRX allows a UE to enter into a "sleep" sate during which it does not need to monitor PDCCH. The UE periodically wakes up to monitor PDCCH or to send a scheduling request for initiating an uplink data transfer. Thus, a base station (gNB) is required to wait until the UE becomes active and only then transmit data to it. Uplink is not delayed, unless the base station configures uplink scheduling request period according to the downlink DRX cycle.

DRX cycle in connected mode is configured by RRC. An inactivity timer is started after each PDCCH reception. After expiry of the inactivity timer, there may be an optional period of short DRX cycles, before the regular (long) DRX cycles. The active period in which the UE reads PDCCH is referred to as "OnDuration" or "DRX active" state. The sleeping period in which the UE does not read PDCCH is referred to as "OffDuration" or "DRX inactive" state. A base station has the possibility to send a UE into the DRX inactive mode anytime by using MAC signaling.

Since Release16, a wake-up signal (WUS) has been provided by a DCI format 2_6. The DCI format 2_6 has been used to wake up a UE or to indicate to a UE to skip PDCCH monitoring before DRX. In particular, this DCI is used for notifying the power saving information outside DRX Active time for one or more UEs. The DCI is scrambled by PS-RNTI and carries:
- a wake-up indication whether the UE is to enter a dormancy state or wake up from the dormancy state; and
- an SCell dormancy indication which is a bitmap where each bit corresponds to one of the SCell group(s) configured by higher layers (RRC), with MSB to LSB of the bitmap corresponding to the first to last configured SCell group. This indicates for which SCells the wake-up indication applies.

In more detail, Section 7.3.1.3.7 of 3GPP TS 38.212 v17.2.0. defines the Format 2_6. Accordingly, DCI format 2_6 is used for notifying the power saving information outside DRX Active Time for one or more UEs. The following information is transmitted by means of the DCI format 2_6 with CRC scrambled by PS-RNTI: *block number 1, block number 2,..., block number N.* The starting position of a block is determined by the parameter PSPositionDCl2-6 provided by higher layers for the UE configured with the block. If the UE is configured with higher layer parameter PS-RNTI and dci-Format2-6, one block is configured for the UE by higher layers, with the following fields defined for the block: Wake-up indication (1 bit), SCell dormancy indication - 0 bit if higher layer parameter Scell-groups-for-dormancy-outside-active-time is not configured; otherwise 1, 2, 3, 4 or 5 bits bitmap determined according to higher layer parameter Scell-groups-for-dormancy-outside-active-time, where each bit corresponds to one of the SCell group(s) configured by higher layers parameter Scell-groups-for-dormancy-outside-active-time, with MSB to LSB of the bitmap corresponding to the first to last configured SCell group. The size of DCI format 2_6 is indicated by the higher layer parameter SizeDCI_2-6.

UE may save power by skipping unnecessary PDCCH monitoring period using format 2_6 DCI. The dormancy can be configured and applied for RRC CONNECTED UEs.

In Release17, a Paging Early Indication (PEI) design has been introduced. It employs DCI format 2_7. DCI format 2_7 is used to indicate UE whether it needs to skip or monitor its paging occasions in each paging cycle. Accordingly, a UE may save power by reducing synchronization signal block (SSB) measurements before detecting PEI, compared with the conventional paging detection, which potentially requires measuring more SSBs. The PEI can be configured in SIB and applied for paging monitoring of both RRC CONNECTED and IDLE/INACTIVE UEs.

If UEs are able to wake up only when they are triggered, e.g., paging, power consumption could be dramatically reduced. This can be achieved by using a wake-up signal to trigger the main radio and a separate receiver which has the ability to monitor wake-up signal with a very low power consumption. Main radio may work for data transmission and reception, which can be turned off or set to deep sleep unless it is turned on. The power consumption for monitoring wake-up signal depends on the wake-up signal design and the hardware module of the wake-up receiver used for signal detecting and processing.

### Low-power wake-up signal (LP-WUS)

In order to target low-power WUS/WUR for power-sensitive, small form-factor devices including loT use cases (such as industrial sensors, controllers) and wearables, signal design and transmitter / receiver operations have to be considered carefully. Other use cases are not precluded, such as XR/smart glasses, smart phones, and the like.

Release 18 LP-WUS/WUR design aims for LP-WUS which is friendly for more efficient receiver structure, e.g. a separate module (e.g. a separate receiver and/or circuitry, which may be provided by hardware and/or software) for LP-WUS detection with relaxed requirement on time/frequency synchronization. The legacy design of the WUS has been basically DCI-based, which requires UE to firstly measure one or more SSBs for AGC training and time/frequency synchronization before detection. Long active time for receiving and processing SSBs is the main source of power consumption.

### Wake-up signal using muted resource elements

In general, the low-power wake-up signal (LP-WUS) may include one or more muted resource elements.

A resource element is a unit of resources such as the smallest resource unit. In NR, as described above, a resource element is defined by a subcarrier in frequency domain and by a symbol (such as OFDM symbol) in time domain. However, the present disclosure is not limited to resource element definition as currently in NR. Rather, it may be a resource element in other resource domains than the time-frequency domain.

The term *"muted"* means that the transmitter does not transmit any power. Accordingly a muted resource element is a resource element in which the transmitter does not transmit any power. It is noted that at the receiver, even in the muted resource elements, some power may be measured. Such power may be caused, for example, by interference.

Provision of the LP-WUS, e.g. including one or more muted resource elements may provide some advantages. For example, a detection of a muted resource requires only a very low processing complexity. Thus, a UE may be capable of achieving more power saving gain. In some implementation, a UE may include a dedicated LP-WUS detection module while switching off (or at least not using) the remaining modules. For example, the dedicated module may be capable to merely detect the muted resource element, i.e. to distinguish the muted received resource elements from unmuted resource elements. Forward error correction (FEC) decoding and possibly demodulation may not be necessary for the detection of the muted resource elements, so that the corresponding modules may be switched-off (or at least do not need to be used). In other words, the LP-WUS signal that includes one or more muted resource element is suitable for being detected on physical layer with only very little of physical layer processing at all.

In particular, the LP-WUS may consist of or more blank and muted resource elements or symbols mapped in configured resource(s). In some more specific implementations, the UE may monitor a LP-WUS which consists of one or more sequences of muted/unmuted resource elements or symbols mapped to the resource elements or symbols in the configured resource. Based on the information obtained by the detection of the LP-WUS, a UE may determine whether to continue receiving/transmitting signal(s) other than the LP-WUS.

In general, the LP-WUS is a signal that indicates whether the communication device is to stop (or e.g. whether it is to continue) a low power Radio (LR) operation. The LP-WUS may be a dedicated wake-up signal, a group-common wake-up signal, a cell-common wake-up signal, or a wake-up signal that indicates that all UE(s) in a registration area are to stop LR operation.

The LP-WUS and/or said one or more muted resource elements corresponding to the LP-WUS or the LP-WUS sequence may be configured in a system information or by a message received by the user equipment within a radio resource control, RRC, protocol message. For example, LP-WUS configuration common to all UEs in a cell or common to a group of UEs may be signaled in system information (e.g. in one of the system information blocks, SIBs). An LP-WUS configuration specific to a UE may be signaled to the UE via an RRC protocol message. However, RRC message may also include the cell -common or group-common LP-WUS configuration. The LP-WUS configuration may include the configuration of LP-WUS occasions, e.g. occasions in which resource elements the UE(s) is/are to detect presence or absence of the LP-WUS. This may be done by specifying periodic time intervals after which a UE is to perform detection of the LP-WUS and/or by specifying the frequency resources to monitor (component carrier, cells, subcarriers, or the like).

A UE may detect whether a pre-configured LP-WUS is present in the pre-configured resources (resource elements). If it is present, the UE wakes up (leaves the LR operation/state). If it is not present, the UE does not wake up (does not leave the LR operation/state). However, the present disclosure is not limited to detecting presence of LP-WUS to wake up. It is conceivable to wake up if an absence of the LP-WUS is detected. It is also conceivable to wake up if a first specific LP-WUS is detected and not wake up if a second specific LP-WUS is detected. The term "specific WUS" denotes a specific, pre-configured one or more muted resource elements or a sequence of muted/unmuted resource elements.

### Low-power Synchronization Signal (LP-SS)

The low-power synchronization signal (LP-SS) is a new synchronization signal to be monitored (e.g. for synchronization) by the communication device when performing the LR operation. It is noted that the term "*low-power*" thus does not necessarily mean that the LP-WUS and LP-SS are transmitted with a particularly low transmission power. The term "*low-power*" rather refers to a (particular) relation of the LPS to the LR operation.

The LP-SS is a synchronization signal with, potentially, different time/frequency domain resource, and/or different sequence(s), from the legacy PSS/SSS. Its waveform can be same with that of LP-WUS, which can be OOK or FSK. LP-SS can be part of the LP-WUS or a separate signal from the LP-WUS. The LP-LPS may be a dedicated synchronization signal, a group-common synchronization signal, a cell-common synchronization signal, or a synchronization signal to be used by all UE(s) in a registration area for synchronization.

### Low power Radio (LR) operation

In the present disclosure, the low-power Radio (LR) operation of a UE may refer to an operation (e.g. an operation mode) (i) in which the UE is required to monitor the LP-WUS, (ii) in which the UE is required to monitor the LP-SS, (iii) in which (possibly only) a particular receiver hardware of the UE that is (specifically) dedicated to the LR operation is active (e.g. is used by the UE for transmission, reception, and/or processing of signals), (iv) in which UE hardware used for transmission/receptions and/or processing of signals in the MR operation is inactive, and/or (v) other signals than the LP-WUS and/or LP-SS are not required to be monitored/received. The particular dedicated receiver hardware may be/include a particular transceiver and/or circuitry, such as the dedicated LP-WUS detection module mentioned above.

The LR operation and LP-WUS differ from the dormancy indication on DCI level (i.e. the LP-WUS differs from the WUS) in that reception of the LP-WUS may merely require detection of (e.g. distinguishing between) muted and unmuted one or more resource elements. LP-WUS may use a "simple" waveform, e.g. OOK and FSK and, thus, the reception complexity may be much lower than ordinary PDCCH monitoring. In particular, DCI detection, such as for the WUS, requires demodulation and decoding as well as possibly further physical layer processing such as beamforming or monitoring of the PDCCH by way of descrambling of the CRC with an appropriate RNTI. In other words, the LP-WUS may differ from the WUS in that the wake-up indication included in the LP-WUS can be obtained from the LP-WUS without demodulation, decoding, physical layer processing such as beamforming or monitoring of the PDCCH by way of descrambling of the CRC with an appropriate RNT. Similarly, a UE may use the LP-SS for synchronization without demodulation, decoding, physical layer processing, and the like.

The LR operation may differ from DRX in that the DRX is based on a pre-configured (by RRC or SIB) DRX cycles so that the network node (base station) cannot flexibly command the UEs to enter inactive mode. The possibility of doing so on MAC level involves complexity of processing the MAC signaling on both MAC layer and physical layer.

In general, the UE Low power Radio (LR) operation may include one or more of:
- RRC INACTIVE/IDLE mode RRM measurement based on LP-WUS/LP-SS, or legacy PSS/SSS/PBCH DMRS.
- RRC CONNECTED mode RRM measurement based on LP-WUS/LP-SS, or legacy PSS/SSS/PBCH DMRS.
- Time/frequency tracking using either SSB, CSI-RS, or LP-WUS/LP-SS.
- Control channel/signal monitoring, e.g., LP-WUS indicating PDCCH monitoring, and/or paging

It is noted that the LR operation is different from the above-described dormancy state of the UE. Both, the dormancy state and the non-dormancy state are part of MR operation, described below. Dormancy state means UE only measures CSI but does not monitor PDCCH, while non-dormancy state means UE needs to monitor PDCCH and measures CSI, if configured.

### Main Radio (MR) operation

In the present disclosure, the Main Radio (MR) operation of a UE may refer to an operation (e.g. an operation mode) (i) in which the UE is not required to monitor the LP-WUS, (ii) in which the UE is not required to monitor the LP-SS, (iii) in which other hardware than the particular receiver hardware of the UE dedicated to the LR operation is active (e.g. is used by the UE for transmission, reception, and/or processing of signals), (iv) in which the particular receiver hardware of the UE dedicated to the LR operation is inactive, and/or (v) other signals than the LP-WUS and/or LP-SS are required to be monitored/received.

In general, the UE MR operation may include one or more of:
- RRC INACTIVE/IDLE mode RRM measurement based on SSB/CSI-RS.
- RRC CONNECTED mode RRM measurement based on SSB/CSI-RS.
- Time/frequency tracking using either SSB, CSI-RS, LP-WUS, and/or LP-SS (Low Power Synchronization Signal); and/or
- Control channel/signal monitoring, e.g., monitoring and/or blind decoding of PDCCH.

In general, the measurements, tracking, and/or monitoring operations to be performed in the MR operations may be more power consuming than the measurements, tracking, and/or monitoring operations to be performed in the LR operation. In other words, when performing the LR operation the UE may consume less power than when performing the MR operation.

It is further note that there can be other operation modes than the MR and LR operation. For instance, a combination of an operation mode that is a combination of MR and LR operation may be provided. The signals to be measured/tracked/monitored in such a combination mode may include some (or all) of the signals to be measured/tracked/monitored in the LR operation and some (or all) signals to be measured/tracked/monitored in the MR operation, Accordingly, in the combination operation mode, the UE may consume more or less power than in MR operation.

It is noted that the standard specification may or may not explicitly specify with respect to the MR and/or the LR operation: (i) time/frequency tracking; (ii) control channels monitoring; (iii) which channel, signal and/or reference signal to receive/monitor/measure; and/or (iv) whether particular MR or LR hardware is to be used in the respective mode; Which channel(s) to be measured like RRM measurement may imply MR or LR operation of the other channel, signal and/or reference signal to be received/monitored/measured.

### Embodiments

3GPP is constantly looking for further possibilities to enhance coverage (UL and/or DL), to improve resource utilization, to reduce latency, and to reduce power consumption, and the like. The inventors have identified the need for supporting and improving efficiency of resource usage and power saving in Rel. 18 in particular in connection with LR operation. The present disclosure relates to different solutions and variants for such an improved power saving procedures and resource usage.

One non-limiting and exemplary embodiment facilitates reduction of power consumptions of communication devices and scheduling devices. In particular, the LP-WUS may be switched ON/OFF via an enhanced/new signaling/procedure, optionally depending on presence/report/request of capable UE(s). This includes the network side LP-WUS ON/OFF operation, changing/adapting the resource used by LP-WUS and interaction/signaling exchange between a scheduling device and a UE. In particular, (i) procedures that allow a UE to request the network to transmit LP-WUS and. (ii) procedures that allow the network to indicate to UE(s) the activation/deactivation of LP-WUS (i.e. indication of LP-WUS ON/OFF) are provided.

Furthermore, a corresponding AS/NAS signaling and procedure may optionally provided to facilitate this operation. For instance, the AS/NAS signaling may facilitate network side S1/X2 coordination on UE request(s) and/or coordination of LP-WUS ON/OFF(s) of different scheduling devices. This is also applicable to network SSB/SIB-less cell operation. More specifically, for network SSB/SIB-less cell operation, in order to save energy, gNB may not send SSB/SIB in a cell so it can sleep for longer time. LP-WUS ON/OFF may then be used by the gNB to indicate to UE(s) the Cell ON/OFF operation. In other words, LP-WUS ON/OFF may indicate whether the cell is currently ON, or is OFF. In both cases (the LP-WUS ON and LP-WUS OFF cases), SSB/SIB can be off but SSB/SIB can also be optionally turned on when Cell (and/or LP-WUS) is ON. The UE may thus know when/where to start monitor LP-WUS and wait for being waken up and schedule. An LPS ON/OFF indication indicating activation of the LP-WUS may thus indicate that the cell is ON, and/or an LPS ON/OFF indication indicating deactivation of the LP-WUS may indicate that the cell is OFF.

Thus, merits of the present disclosure cover both UE side power saving and network energy saving.

The present disclosure in particular provides a scheduling devices, corresponding methods for scheduling devices, user equipments, corresponding methods for user equipments, communications systems comprising such scheduling devices and user equipments, as well as integrated circuits which, in operation, control a processes of scheduling devices/user equipment to perform the respective methods.

### Terminology

In the following, UEs, base stations, and procedures will be described for the new radio access technology envisioned for the 5G mobile communication systems, but which may also be used in LTE mobile communication systems or future mobile communication systems. Different implementations and variants will be explained as well. The following disclosure was facilitated by the discussions and findings as described above and may for example be based at least on part thereof.

In general, it should be noted that many assumptions have been made herein so as to be able to explain the principles underlying the present disclosure in a clear, concise and understandable manner. These assumptions are however to be understood as merely examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure. In particular:

### User Equipment

A ***terminal*** or ***user terminal*** or ***user device*** or ***mobile station*** or ***mobile node*** or ***mobile device*** is referred to in the LTE and NR as a ***user equipment (UE)**.* This may be a mobile device or communication apparatus/device such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### Base Station

In the present disclosure, the ***base station*** may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well. A base station may be a ***scheduling node*** or ***network node***, e.g. forming a part of the network for providing services to terminals. In particular, a base station may provide wireless access to terminals. Communication between the communication device (e.g. UE or terminal) and the scheduling device (e.g. base station) is typically standardized and may be defined by different layers, such as PHY, MAC, RRC etc. (see also the above discussion). In LTE and NR, the wireless interface protocol stack includes physical layer, medium access layer (MAC) and higher layers. In control plane, higher-layer protocol Radio Resource Control protocol is provided. Via RRC, the base station can control configuration of the terminals and terminals may communicate with the base station to perform control tasks such as connection and bearer establishment, modification, or the like, measurements, and other functions. The terminology used in LTE is eNB (or eNodeB), while the currently used terminology for 5G NR is gNB. The term *"base station"* or *"radio base station"* here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. In particular, the base station may also be gNB in a Non-Terrestrial Network (NTN) NR system.

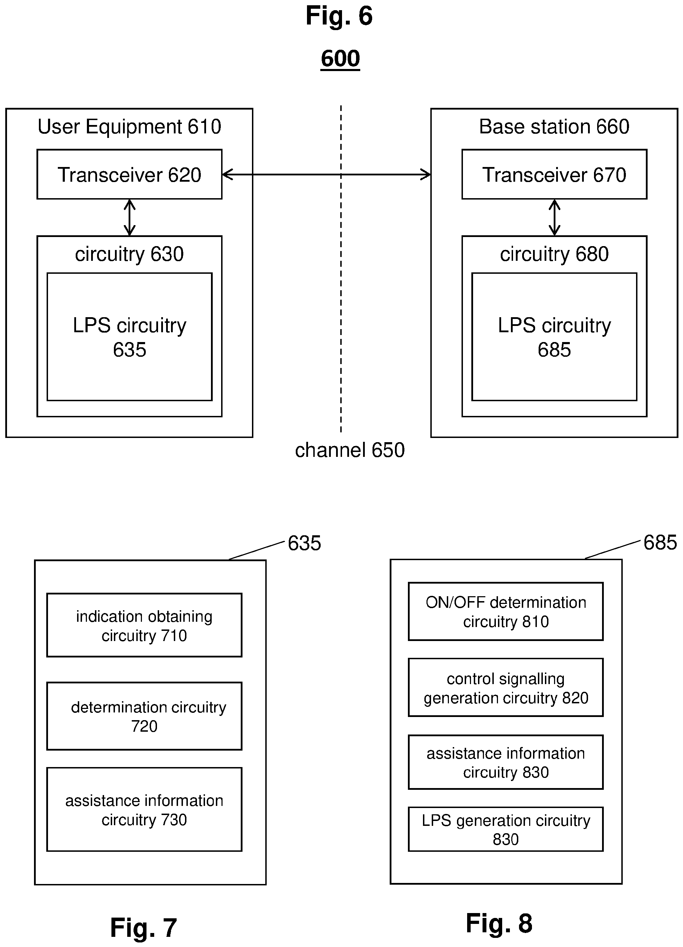

As already mentioned above, the present disclosure provides a scheduling device (e.g. a base station) and a communication device (e.g. a scheduled device or user equipment). The present disclosure further provides a system including a scheduled and scheduling device, as well as a corresponding methods, integrated circuits, and programs. An example of such communication system is illustrated in **Fig. 6****.** The communication system 600 may be a wireless communication system in accordance with the technical specifications of 5G, in particular a NR communication system. However, the present disclosure is not limited to 3GPP NR terrestrial networks (TN) and may also be applied to NTNs or other wireless or cellular systems.

**Fig. 6** illustrates a general, simplified and exemplary block diagram of a communication device 610 (here exemplarily assumed to be a UE) and a scheduling device 660 (here exemplarily assumed to be located in a base station, e.g. in a LTE eNB (alternatively termed ng-eNB) or the gNB in 5G NR). However, in general, a scheduling device may also be a terminal in case of a sidelink connection between two terminals. Moreover, in particular with respect to the use cases of URLLC; eMBB, and mMTC, the communication device 610 may also be a sensor device, a wearable device, or a connected vehicle, or a controller of an automated machine in an industrial factory. Further, a communication device 610 may be able to function as a relay between a base station and another communication device (e.g. the disclosure is not limited to communication "terminals" or user "terminals").

As illustrated in **Fig. 6****,** the communication device 610 and the scheduling device 660 (eNB/gNB) may communicate with each other over a (wireless) physical channel 650 respectively using their transceivers 620 (UE side) and 670 (base station side). Together, the scheduling device 660 and the terminal 610 form the communication system 600. The communication system 600 may further include other entities such as those shown in Fig. 1.

As illustrated in **Fig. 6** (left-hand side), a communication device may comprise a transceiver and circuitry (or processing circuitry), and a scheduling device may comprise a transceiver and a (processing) circuitry. The ***transceiver*** in turn may comprise and/or function as a receiver and/or a transmitter. In this disclosure, in other words, the term *"**transceiver**"* is used for hardware and software components that allow the communication device, or, respectively base station to transmit and/or receive radio signals over a wireless channel. Accordingly, a transceiver corresponds to a receiver, a transmitter, or a combination of receiver and transmitter. Typically, a base station and a communication device are assumed to be capable of transmitting as well as receiving radio signals. However, particularly with respect to some applications of eMBB, mMTC and URLLC (smart home, smart city, industry automation etc.), cases are conceivable in which a device, such as a sensor, only receives signals. Moreover, the term "circuitry" includes processing circuitry formed by one or more processors or processing units, etc.

A transmitter may be responsible for performing the process of transmitting and other processes related thereto. A receiver may be responsible for performing the process of receiving and other processes related thereto, such as monitoring a channel.

A ***circuitry*** or ***processing circuitry*** may be one or more pieces of hardware such as one or more processors or any LSIs. Between the transceiver and the processing circuitry there may be an input/output point (or node) over which the processing circuitry, when in operation, can control the transceiver, i.e. control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc.

According to an exemplary embodiment, a communication device 610 as e.g. illustrated in **Fig. 6** (left-hand side) is provided. The communication device 610 comprises a transceiver 620 and circuitry 630. The transceiver, in operation, receives a control signalling. The (processing) circuitry 630, in operation, obtains from the control signalling one or more of: (i) a low-power signal (LPS) ON/OFF indication, and (ii) an LPS resource indication. For instance, the communication device 610 may obtain the LPS indication(s) (LPS ON/OFF indication and/or the LPS resource indication) from the control signalling by parsing the control signalling and/or extracting, from the control signalling, said LPS indication(s).

It is noted that in the present disclosure the phrase "*one or more*" of several option/possibilities includes the possibility that any numbers of those options/possibilities may be chosen. In particular, any combination/number or even all of said option/possibilities may be selected/performed/apply.

It is noted that the circuitry 630 may implement more functionality than the above-mentioned obtaining of the LPS indication(s), as it may, for instance, further control the transceiver 620 in particular to receive the control signalling, to receive the LPS signal, and/or to receive or transmit data. Thus, the circuitry 630 is exemplarily considered to include LPS circuitry 635, which is configured to perform said obtaining of the LPS indication(s).

Fig. 7 shows an exemplary functional structure of the LPS circuitry 635. In particular, the LPS circuitry 635 may include LPS indication obtaining circuitry 710, which may be performing the obtaining of the LPS indication(s). It is noted that the LPS circuitry 635 may also implement more functionality, as it may, for instance, also be responsible for determining signals and/or channels for transmission and/or reception (or for monitoring). In particular, LPS circuitry 635 may also be responsible for determining whether to monitor/receive the LPS (if active). Thus, the communication device 610 is exemplarily assumed to include, e.g. as a part of the LPS circuitry 635, a determination circuitry 720, which determines said signals and/or channels. Alternatively or in addition, LPS circuitry 635 may be responsible for the provision of assistance information as further explained below. Thus, the communication device 610 is exemplarily assumed to include, e.g. as a part of the LPS circuitry 635, assistance information circuitry 730, responsible for the provision of assistance information.

The configuration may be provided by hardware adaption and/or by software.

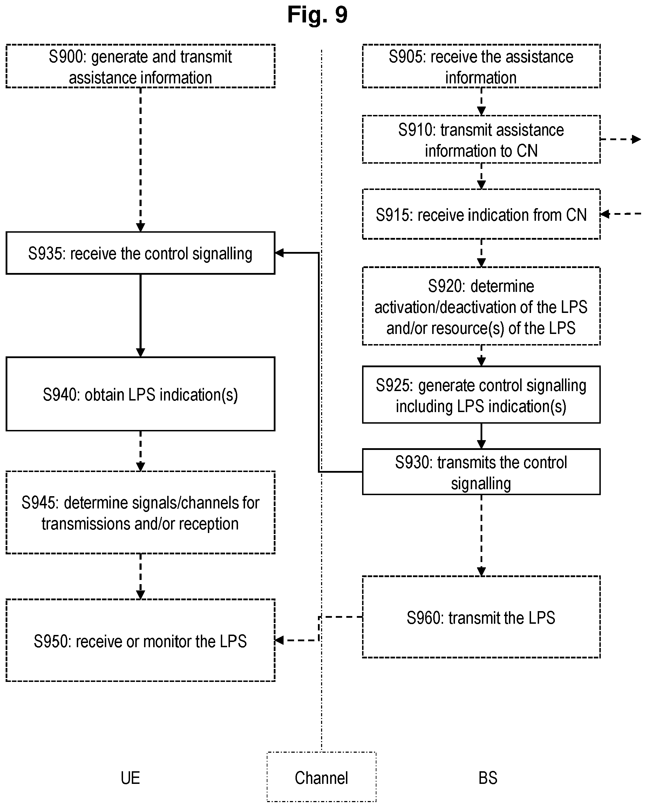

In correspondence with the above described communication device, a method to be performed by a communication device is provided. As shown in **Fig. 9****,** the method comprises a step of (i) receiving S935 a control signalling; and (ii) obtaining S940, from the control signalling one or more LPS indication(s). For instance, the LPS indication(s) may be obtained, from the control signalling, by parsing the control signalling and/or extracting, from the control signalling, said LPS indication(s).

As further shown in **Fig. 9****,** the method may, optionally, comprise a step of (i) generating and transmitting S900 assistance information, (ii) determining S945 signals/channels for transmissions and/or reception, and/or (iii) receiving S950 or monitoring S950 the LPS (e.g. in accordance with a result of the determination in step S945). The method may, optionally, also comprise a step (not shown in Fig. 9) a step of transmitting and/or receiving other signals/channels determined in step S945.

As also shown in **Fig. 6** (right-hand side), according to another exemplary embodiment, a scheduling device 660 is provided. The scheduling device 660 comprises a transceiver 670 and circuitry 680. The (processing) circuitry 680, in operation, generates a control signalling including LPS indication(s). The transceiver which, in operation, transmits the control signalling.

The circuitry 680 may implement more functionality than the above-mentioned generating of the control signalling, as it may, for instance, further control the transceiver 670 to transmit the control signalling, to transmit the LPS (if active), and/or to receive or transmit data. Thus, the circuitry 680 is exemplarily considered to include LPS circuitry 685, which is configured to perform the generating of said control signalling.

An exemplary functional structure of LPS circuitry 685 is shown in **Fig. 8****.** It is noted that the LPS circuitry 685 may also implement more functionality, as it may, for instance, also be responsible for the processing of assistance information. In particular, the LPS circuitry 685 may include (i) ON/OFF determination circuitry 810 responsible for determining whether/when the LPS is to be active and/or for determining the resource(s) to be used for the transmission of the LPS; (ii) control signalling generation circuitry 820, responsible for generating of the control signalling including the LPS indication(s); (iii) assistance information circuitry 830 responsible for the processing of assistance information; and/or (iv) LPS generation circuitry 830 responsible for generating the LPS (in accordance with the activation state and/or resource(s) indicated by the LPS indication(s)).

The configuration may be provided by hardware adaption and/or by software.

Furthermore, in correspondence with the above described scheduling device, a communication method to be performed by a scheduling device is provided. As shown in **Fig. 9****,** the method comprises a step of (i) generating S925 control signalling including LPS indication(s); and (ii) transmitting S930 the control signalling.

As further shown in **Fig. 9****,** the method may, optionally, comprise a step of: (i) receiving S905 assistance information; (ii) transmitting S910 to the CN; (iii) receiving S915, from the CN, indications regarding/indicating LPS activation/deactivation and/or LPS resource(s); (iv) determining S920 activation/deactivation of the LPS and/or determining S920 resource(s) of the LPS; and/or (v) transmitting S960 the LPS.

Moreover it is noted that, since the present disclosure relates to resource usage and scheduling, both entities, a scheduled device (typically communication device/transceiver device) and a scheduling device (typically a network node) take part. Accordingly, in the further description, the details and embodiments apply to (and may be implemented by them) each of the communication device, the scheduling device (or scheduling node), and the corresponding methods unless explicit statement or context indicates otherwise. In particular, the scheduling device may be configured to generate and transmit the control signals as described below and the communication device/UE may be configured to receive such signalling and obtain the respective indications therefrom. Furthermore, the communication device may be configured to generate and transmit assistance information, and the scheduling device may be configured to receive the assistance information, to obtain the respective indications therefrom, and/or to forward the assistance information to another scheduling device or the Core Network (CN).

Furthermore, it is noted that any of the steps/operations described below may be performed or controlled by the circuitry 630 (on the UE side) and/or the circuitry 680 (on the base station side). Furthermore, any reception and transmission steps may be performed by the transceiver 620 (on the UE side) and/or the transceiver 670 (on the base station side) (e.g. by being controlled by the respective circuitry to do so).

### Low-power signal (LPS)

In general, a low-power signal (LPS) is a signal related to a low-power radio (LR) operation of the communication device. In particular, in general, the LPS may be:
(i) a low-power wake-up signal (e.g. a LP-WUS as explained above); or
(ii) a low-power synchronization signal (e.g. a LP-SS as explained above).

An LPS it may be generated by the LPS generation circuitry 830 in accordance with the activation state and/or resources indicated by the LPS indication(s), transmitted by the scheduling device in step S960, and received by the UE(s) in step S950. More specifically, the LPS may be transmitted in the resources indicated in LPS resource indications transmitted to the UE(s) in step S930, and it may be generated when/while it is active.

The scheduling device (e.g. circuitry 680, in particular ON/OFF determination circuitry 810) or the CN may determine S920 whether/when the LPS is to be active and/or determine the resource(s) to be used for the transmission of the LPS. The resources may be periodic resources (i.e. periodic in time).

A scheduling device may perform these determination(s) based on:
- assistance information received from UE(s);
- assistance information received from other scheduling devices (which may include assistance information (i) provided by a UE to the other scheduling device, and (ii) subsequently forwarded by the other scheduling device to the scheduling device), and/or
- assistance information from the CN (which may also include forwarded assistance information).

The determination step may not be performed by the scheduling device in particular when the determination is performed by the CN, the CN transmit a corresponding indication indicating the result of the CN's determination to the scheduling device, and the scheduling device receives such indication from the CN (e.g. in step S915).

If the CN performs these determination(s), the CN may base these determination(s) on assistance information received from scheduling devices. Such assistance information may include assistance information (i) provided by a UE to a scheduling device, and (ii) subsequently forwarded by the scheduling device to the CN.

### LPS indication(s)

After receiving the control signalling in step S935, the communication device (e.g. LPS indication obtaining circuitry 710) obtains in step S940, from the control signalling, one or more LPS indication(s). Examples of LPS indication(s) are the LPS ON/OFF indication and the LPS resource indication as e.g. further explained below. In other words, a UE may for instance receive, from a gNB, signaling regarding the activation/deactivation and/or regarding the resource(s) of the LP-WUS or of the LP-SS.

The transmission of the LPS indication(s) may allow the scheduling device/gNB side to achieve energy saving and improve resource usage (e.g. unnecessary transmissions of the LPS may be reduced). Furthermore, the gNB may also be able to adapt the Tx/Rx of the LPS more dynamic in combination with cell ON/OFF. More specifically, as explained above, LP-WUS ON/OFF may represent Cell ON/OFF. The activation/deactivation (ON/OFF) of LP-WUS/LP-SS can thus be used to control the cell ON/OFF operation, e.g., when cell operates without legacy SSB/SIBx. When Cell is ON, LP-WUS may be transmitted so that UE can monitor the LP-WUS to be waken up and scheduled. When Cell is OFF, LP-WUS can be deactivated.

### Low-power signal (LPS) ON/OFF indication

In general, an LPS ON/OFF indication may be:
- an indication that indicates activation of an LPS (e.g. that the LPS is active and/or that the LPS will be become active as of a certain time, which may also be indicated), and/or
- an indication that indicates deactivation of an LPS.

It is noted that the term *"activation"* does not necessarily mean that the LPS has to change its state from inactive to active. The indication indicating activation of the LPS may be an indication that the LPS remains active (e.g. if the LPS is currently active). Similarly, an indication indicating deactivation of the LPS may be an indication that the LPS remains inactive (e.g. if the LPS is currently inactive). An indication of an activation or deactivation may include an indication of a time when the activation/deactivation takes place (in particular when the indication indicates a change of the current state of the LPS); and/or an indication of a validity time (i.e. of a duration how long the indicated activation/deactivation applies and after which, if not indicated otherwise by another PLS indication, the LPS returns to its current activation state).

### Low-power signal resource indication

In general, the LPS resource indication indicates the resource(s) of the LPS. In other words, LPS resource indication may inform the UE of the resource(s) (e.g. some, or all resources) will be used for the transmission(s) of the LP-WUS/LP-SS. The resources may be time, frequency, and/or code domain resource(s). Furthermore, the resources may be periodic in time. For instance, the LPS may be transmitted according to a regular time-pattern. Accordingly, the LPS resource indication may indicate said regular pattern e.g. by specifying a time(duration) between transmissions of the LPS.

More particularly, an LPS resource indication may be used to indicate, to a UE, a transmission periodicity of the LP-WUS/LP-SS (e.g. a duration of the duration between transmissions of the LPS). In particular, a LPS resource indication may be used to change the pattern, in particular the periodicity, of the LP-WUS/LP-SS (i.e. by indicating a *"new"* pattern/periodicity that is different from a current pattern/periodicity of the LP-WUS/LP-SS.

It is noted that, if the control signalling includes an LPS ON/OFF indication and an LPS resource indication, both these indications may refer to the same LPS. More specifically, the control signalling may include a LPS ON/OFF indication indicating activation/deactivation of an LPS, and an LPS resource indication indicating the resource(s) of said LPS for which the LPS ON/OFF indication included in said control signalling indicates activation/deactivation.

### UE Determinations (S945)

After receiving the control signalling (and obtaining the LPS indication(s)), the UE 610 may determine whether/where to monitor/receive the LPS (i.e. the LP-WUS/LP-SS). It is noted that the UE may determine that the LPS is to be monitored in the resource(s) indicated in the LPS resource indication.

Furthermore, the communication device may determine the transmission and/or reception (Tx/Rx) of one or more UUDL signal/channels. In particular, the communication device 610 (e.g. determination circuitry 720) may determine (e.g. in step S945), in accordance with the control signalling, one or more of (i.e. any combination/number or even all of):
(i) whether to monitor the LPS (e.g. in accordance with or based on an LPS ON/OFF indication included in the received control signalling),
(ii) resources of the LPS (e.g. in accordance with or based on an LPS resource indication included in the control signalling; to be specific: a UE may determine that the resource(s) indicated by the LPS resource indication are the resource(s) in which the LPS is transmitted by a base station or a scheduling device),
(iii) tracking of one or more reference or synchronization signal(s), and
(iv) monitoring of one or more downlink signals (DL) and/or channels (e.g. blind decoding of a PDCCH with a certain identifier in particular when performing MR operation), and
(v) transmission of one or more uplink (UL) signals and/or transmission in one or more UL channels.

It is noted that the above determinations may include a step of determining whether or not to perform LR operation (e.g. to start or continue LR operation). Alternatively, the UE may determine whether to perform (i) LR operation, (ii) MR operation, or (iii) a combination of LR and MR operation. Such determinations may be performed in accordance with an LPS ON/OFF indication included in the control signalling. In particular, the communication device may determine that the LR operation is not to be performed while the LPS is deactivated. The result of this determination may also depend on whether and/or how much data is to be transmitted and/or received by the communication device (e.g. based on the buffer status of the UE). Furthermore, the communication device may take into account power considerations such as its own battery status and the like.

It is noted that, the UE may determine to monitor the LPS when determining to perform the LR operation, and/or may determine to not monitor the LPS when determining not to perform the LR operation.

Furthermore, the above determination of signals and/or channels may depend on the result of the determination of whether LR is to be performed (alternatively, on the result whether to perform LR operation, MR operation, or a combination of LR and MR operation). More specifically, as already mentioned abvoe, the signals or the configuration of the signals (e.g. periodicity), which are allowed to be used for Tx/Rx, can be different for MR and LR operation. For example, LR operation may not be allowed to Tx in the UL and only MR operation is allowed to perform UL transmissions. Another example is, that a UE may be allowed, in LR operation, to transmit only a specific signal in limited (e.g. specific preconfigured) resource(s); whereas in MR operation, the UE may be less limited and allowed to transmit different signals in a plurality of channels/resource(s).

Furthermore, the reference and/or synchronization signal(s) that are to be tracked when performing LR operation may be different than the reference and/or synchronization signal(s) that are to be tracked when performing MR operation. Moreover, the DL signals and/or DL channels to be monitored for LR operation may be different than the DL signals and/or DL channels to be monitored for MR operation.

Accordingly, reception of a control signalling including LPS indication(s), may prompt a UE to (i) change its operation mode, (ii) monitor different signals/channels (different than without/before reception of a control signalling); and/or (iii) perform transmissions and/or reception in different channels different than without/before reception of a control signalling).

When the communication device 610 determines (e.g. in step S945), that the LPS is to be monitor, the communication device may receive/monitor the LPS in step S950. Furthermore, the communication device may perform transmission(s) and reception(s) of other signals in accordance with the result of the determination in step S945.

It is noted that the scheduling device 660 may perform a determination similar to the determination of the UE in step S945. More specifically, the scheduling device (e.g. circuitry 680) may determine one or more of:
(i) whether to transmit the LPS,
(ii) the resource(s) of the LPS,
(iii) whether to transmit of one or more reference or synchronization signals,
(iv) whether to transmit one or more downlink signals and/or in one or more downlink channels, and
(v) whether to receive one or more uplink signals and/or in one or more uplink channels.

The scheduling device (e.g. circuitry 680, in particular LPS circuitry 685 or control signalling generation circuitry 820) may then generate in step S925 the LPS indication(s) in the control signalling in accordance with result(s) of this determination, In particular, when the scheduling device determines that the LPS is or is not to be transmitted, it may respectively include an LPS ON/OFF indication indicating the activation or deactivation of the LPS. Furthermore, the scheduling device S925 may include an LPS resource indication indicating the resource(s) determined for the LPS. The scheduling device may then also perform step(s) of transmitting or receiving in accordance with the above determinations (iii) to (v). In particular, the scheduling device may determine that the UE will perform LR or MR operation in accordance with the LPS ON/OFF indication transmitted in accordance with the determination (i). As mentioned above, LR and MR operation may imply that the UE is assumed to monitor certain reference signal/channels or perform transmissions/receptions of certain signals or in certain channels. The scheduling device (being the communication partner/the other side in these transmissions) may thus transmit the certain reference signal/channels so that the UE can monitor them, and perform the corresponding receptions/transmissions of said certain signals or in said certain channels.

The reception control signalling may thus make the UE aware of the activation/deactivation of the LPS and/or of the resources of the LPS. This may allow the UE to achieve power saving by switching to the LR operation, when appropriate.

### Assistance Information

As already mentioned above, a communication device (e.g. UE 610, in particular LPS circuitry 635 and/or assistance information circuitry 730) may optionally provide S900 assistance information. More specifically, assistance information may be generate and transmitted (e.g. directly or indirectly via a relay) to the scheduling device (e.g. a gNB).

Here *"assistance information"* refers to LPS-related and/or LR-related information (i.e. related to the LP-WUS/LP-SS/LR). In particular, assistance information is any information that a receiving scheduling device or the CN may use for determining whether LPS(s) is/are to be activated/deactivated and/or for determining appropriate resources(s) for LPS(s).

In particular, the communication device 610 (e.g. transceiver 620) may transmit (as assistance information or as part of the assistance information):
- an activation request requesting the activation of an LPS;
- a deactivation request requesting the deactivation of an LPS;
- a report (in the present disclosure, also referred to as *"measurement report*"); including information on a measurement of a reference signal performed by the communication device and/or
- a capability signalling or indication (in the present disclosure, also referred to as *"capability report*") indicating a capability of the communication device to perform LR operation.

It is noted that these different types of assistance information may transmitted in different transmissions or together, as part of the same transmission.

The activation request is a request of the communication device that the LPS is to be activated (or that the LPS is to remain active). The communication device may transmit such a request in particular when it intends (e.g. has determined) to perform the LR operation. Transmission of an activation request may make the scheduling device/network aware that the communication device wants to perform LR operation. In response, the scheduling device/network may transmit/activate the LPS, which may allow the UE to perform LR operation and to save power.

The deactivation request is a request of the communication device that the LPS is to be deactivated (or that the LPS is to remain inactive). The communication device may transmit such a request in particular when it intends (e.g. has determined) to perform the MR operation.

Transmission of a deactivation request may make the scheduling device/network aware that the communication device does not (or no longer) want to perform LR operation. In response, the scheduling device/network may deactivate the LPS, which may allow the scheduling device/network to save power.

The measurement report includes information on a measurement or a measurement(s) of one or more reference signal(s). These measurement(s) have been performed by the communication device, any may be or include RRM measurement(s). A communication device 610 may transmit a measurement report in particular when in the RRC CONNECTED mode. The UE may transmit such a report e.g. in layer 1 or layer 3 L1/L3-RSRP/RSSI/SINR/RSRQ report. More specifically, a UE may transmit such a report e.g. in a L1 reference signal received power (RSRP) report, in a L1 signal interference plus noise ratio (SINR) report, in a L3 RSRP report, in a L3 received signal strength indication (RSSI), and/or in a L3 reference signal received quality (RSRQ) report (which is the ratio of RSRP and RRSI).

The capability signalling indicating a capability of the communication device to perform LR operation. In particular, the capability signalling may indicate whether or not the communication device is capable to perform LR operation. For instance, LR operation may require the communication device to have a low-power transceiver (in addition to the "*normal*" transceiver used in the MR operation). Such as LR capability indication may make the scheduling device/network aware of the capability of the UE(s) and help to determine whether the LPS should be transmitted. This may help the network to save power by reduce unnecessary activation/transmission of LPS(s).

Accordingly, the scheduling device 660 may optionally receive (e.g. in step S905) assistance information from one or more communication device(s). In particular, the scheduling device (e.g. transceiver 670) may receive, from a communication device (or from each of a plurality of communication devices):
- an activation request requesting the activation of an LPS;
- a deactivation request requesting the deactivation of an LPS;
- a report including information on a measurement of a reference signal performed by the communication device; and/or
- a capability signalling indicating a capability of the communication device to perform the LR operation.

Furthermore, the scheduling device 660 (e.g. circuitry 680, in particular LPS circuitry 685 and/or assistance information circuitry 830), may process the received assistance information. In particular, the scheduling device 660 may transmit S910 or forward S910, to other scheduling devices or the core network (CN), the assistance information (or part of the assistance information). Step S910 may in general performed jointly with transmission of assistance information received from a plurality of UEs

In particular, the scheduling device 660 may performs the determination in step S920 (i.e. whether to activate/deactivate and/or the resource(s) of the LPS) based on or taking into account assistance information received from the communication device(s).

The transmission of assistance information by the communication device helps the scheduling device (e.g. a gNB) or the CN to activate/make use of LP-WUS/LP-SS more appropriately (e.g. may help reduce activation/transmission of the LPS when the LPS is not needed).

### Information on Measurement(s)

In general, the information on the measurement(s), included in a measurement report, may include one or more of:
- an indication of a result of the measurement (e.g. strength of the received/measured reference signal, signal to noise ratio, Signal interference plus noise ratio, and/or other indicators of the quality of the received reference signal);
- an indication indicating whether the measurement has been performed during LR operation of the communication device, MR operation of the communication device, or a combination of the LR and the MR operation. Such an indication may e.g. be/include an indication whether a low-power receiver or a main receiver has been used when/for performing the reference signal measurement. In other words, an indication indicating whether/which results in the measurement report are MR and/or LR-based measurement (i.e., which operation mode was being operated when performing the respective measurement(s) were performed). Such an indication may be included when the report and/or configuration of the report is not able to distinguish/mandate whether MR or LR operation should have been performed during the measurement. More specifically, if the gNB does not know whether LR/MR is used by the UE, e.g., since the UE (generally) decides on its own or is allowed/configured by the gNB to decide. The UE may e.g. switch/determine its state/operation mode based on certain conditions/criteria. In this case, the UE may report which operation mode (e.g. LR or MR) is used to generate the measurement result. In general, the reporting of MR-based measurements may be in different resource(s) than reporting of LR-based measurements, which may allow the gNB to determine the operation mode (even without explicit indication). If, on the other hand, MR/LR based measurements are configured to be reported together in the same occasion/transmission/resources, a coding/mapping rule may be used and/or an explicit indication of the mode may be included to allow the gNB to distinguish the mode used when performing the measurement. If, on the other hand, the gNB configures/decides whether LR or MR is to be used for the measurement(s), the gNB already knows the operation mode so that, in this case, an indication of the operation mode may be not be included. It is further noted that both LR- and MR-based measurements may be performed and reported (e.g. together). In particular, differential reporting may be used in such a case. More specifically, the result(s) of the measurements of one mode may be reported as reference (i.e. the measured value may be reported/indicated in a measurement report), and the result(s) of the measurements of the other mode may be reported as differential values (i.e. the difference between the measured value(s) of the two modes may be reported/indicated in a measurement report).an indication of a time at which the measurement has been performed. For instance, time occasion(s)/tag(s) when the measurement(s) in the report have been performed and/or sampled during MR and/or LR operation. In general, LR-based measurement(s) may be less accurate and reliable than the MR-based measurement(s) (e.g. since the LR-based measurement(s) use only the dedicated LR receiver hardware mentioned above, whereas MR-based measurement(s) may (also) use other hardware). Furthermore, typically (but not necessarily), different signals may be measured by LR- and MR-based measurement(s). For instance, LR may measure LP-WUS and/or LP-SS; and MR may measure SSB and/or CSI-RS.
- an indication of a location at which the measurement has been performed. For instance, UE location(s)/position(s) where the respective measurement(s) in the report have been performed may be included;
- an indication whether measurements of the reference signal are getting larger or smaller (with time). For instance, indication(s) whether the values of samplings of the L1/L3-RSRP/RSSI/SINR, used to generate the measurement report, are getting larger or smaller (over/with time, e.g. whether there is a tendency for smaller or larger measurement values). The measurement(s) can be for either serving cell or neighboring cell. Getting larger/smaller may mean the samples meet a criteria that a series of averaged values within several measuring windows, respectively, is getting larger/smaller. For instance, "getting larger" may mean that the average of the last (i.e. most recent in time) three measurements of a reference signal is larger than the average of the three measurements of said reference signals immediately before the said last three measurements;
- an indication indicating a cell for which the measurement is performed. For instance, an indication indicating whether the measurement has been performed for a reference signal of a serving cell (of the UE transmitting the measurement report) or for a reference signal of a neighboring cell (i.e. a cell neighboring/next to said serving cell) may be included;
- an indication indicating whether the UE is leaving/approaching the cell center or is stationary. For instance, one or more of the following an indications may be included:
   ∘ whether the communication device is moving away from a cell center,
   ∘ whether the communication device is moving towards a cell center, and/or
   ∘ whether the communication device is stationary; and
- an indication of a velocity vector of the communication device. In other words, the UE moving velocity vector (which includes the speed of the UE and the direction in which the UE is moving) may be included.

The information included in the measurement report may help a gNB or CN to have overall system level UE mobility information and whether MR/LR is used. Then gNB/CN is able to control the activation/deactivation of the LP-WUS/LP-SS more appropriately, which may reduce power consumption and reduce resource usage.

### Transmission of Assistance Information

It is noted that a UE may be configured/capable to transmit assistance information using one or more (i.e. any combination/number) of the possibilities disclosed herein, and the scheduling device may be configured/capable to receive assistance information one or more of the possibilities disclosed herein.

In general, UE request and report(s) may help gNB(s) and/or CN to be aware of the existence of UEs with LR and manage the usage of LP-WUS/LP-SS, which enables/improves UE power saving. It may also help the gNB(s)/CN controlling activation/deactivation of LP-WUS/LP-SS, which further benefits the gNB(s)/CN energy saving with transmission ON/OFF.

### Transmission of Assistance Information using L1/L2/L3 signaling

In general, the UE may send the gNB the request of activation/deactivation of LP-WUS/LP-SS, the measurement report, and/or the support/capability of LP-WUS/LP-SS/LR/related operation, using L1/L2/L3 signaling. In particular, the communication device (e.g. transceiver 620) may transmit the activation request, the deactivation request, the measurement report, and/or the capability signalling using:
- configured Physical Uplink Control Channel (PUCCH) resources,
- configured Physical Random Access Channel (PRACH) resources,
- a radio resource control (RRC) message,
- a Media Access Control (MAC) control element (CE), or
- a RACH procedure signalling.

It is noted that the PUCCH or PRACH resources may be configured by RRC message, SIB configuration, or NAS signaling beforehand.

More specifically, L1 signalling may e.g. be performed using (preconfigured or predetermined) PUCCH and/or PRACH resources. For instance, a certain configured time/frequency/code domain of PUCCH or PRACH resource(s) may be used by the UE to indicate a gNB the assistance information.

The L2 signalling may be performed using a MAC CE. The particular MAC CE to be used by the UE may be preconfigured by the gNB and/or predetermined.

The L3 signalling may be performed using an RRC message, e.g.: Feature Group indication (FGI) bits in the *UECapabilityInformation* message may be used to report assistance information, in particular the support of the reception capability of LP-WUS/LP-SS and its measurement, after UE receives the *UECapabilityEnqiry* from gNB. Alternatively or in addition, a (new) information element (IE) in the RRCSetupComplete message may be defined.

### Transmission of Assistance Information using RACH procedure

In general, the communication device (e.g. transceiver 620) may transmit (e.g. as part of step S900) the activation request, the deactivation request, the report, and/or the capability signalling using message 3 (Msg3) or message 5 (Msg5) of a RACH procedure (e.g. as part of or in combination with the signalling/transmissions of a RACH procedure).

In general, the present disclosure is not limited to any particular RACH procedure between the communication device and the scheduling device. In particular, the RACH procedure may be a 2- or a 4 step-RACH procedure.

A 2-step RACH procedure, usually includes an initial transmission of from the UE to the gNB (this message is also referred to is MsgA), and, response to MsgA, a transmission from the gNB to the UE (this message is also referred to is MsgB and includes Msg2 (also known as RAR message) and Msg4 (also known as RRC connection setup)). In a 2-step RACH procedure, Msg3 (also known as RRC connection request) is transmitted together with Msg1 (also known as RACH Preamble) by the UE to the gNB in MsgA.

A 4-step RACH procedure, usually includes an initial transmission of Msg1 from the UE to the gNB, transmission of Msg2 from the gNB to the UE, transmission of Msg3 from the UE to the gNB, transmission of Msg4 from the gNB to the UE (in this order). In particular, in a 4-step RACH procedure, Msg1 and Msg3 are transmitted separately.

Both, the 2-step RACH procedure and 4-step RACH procedure, may include (or be followed, depending on whether Msg5 is considered part of the 2-step or 4-step RACH) a further transmission from the UE to the gNB. This transmission is also referred to as Msg5 (also known as RRC connection setup complete).

In general, the assistance information (in particular report/request) wmay be transmitted by the respective UE with or without inclusion/indication of its UE ID in/with the assistance information. This (UE ID may or not may not be included) applies in particular to the possible requests on Msg3, but also to other transmission methods of assistance information disclosed herein. Whether Id information is provided by the UE, may influence how/whether the UE will/may be indicated in other signaling part disclosed herein (e.g. when forwarding assistance information the other scheduling device and/or the CN).

For instance, an RRC message including the assistance information (request/report) may be added into one of the currently defined messages within Msg3/5. For instance, Msg3 is currently defined to have 48 bits, 12 bits of which are currently spare/unused and may be used for assistance information.

In other words, the assistance information may be included in a currently defined message within Msg3/5. In particular, a UE 610 may transmit the activation request, the deactivation request, the report, and/or the capability signalling in the RRCSystemlnfoRequest message in Msg3 of a RACH procedure (e.g. in accordance with 5.2.2.3.4 of 3GPP TS 38.331, v. 17.5.0 ).

For instance, a UE 610 may transmit the activation request, the deactivation request, the report, and/or the capability signalling in the RRCSetupRequest message in Msg3 of a RACH procedure. For instance, to indicate an activation/deactivation request, a new "*Cause*" may be defined within EstablishmentCause like "LP-WUS/LP-SS request"

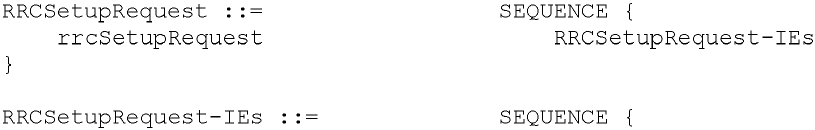

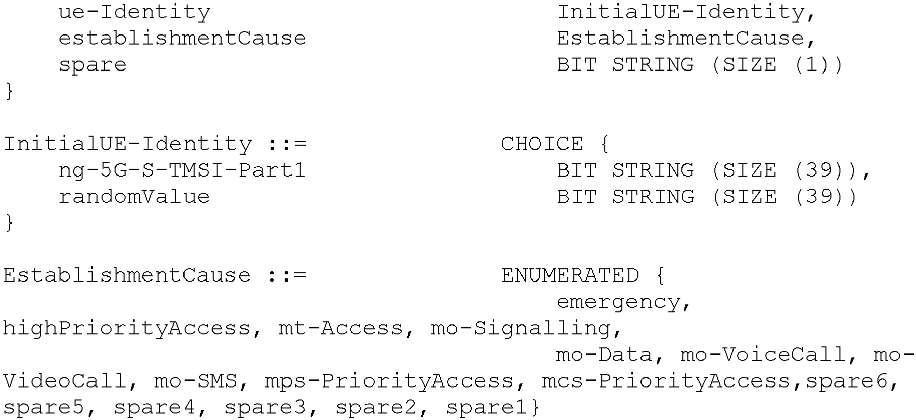

However, the present disclosure is not limited to including the assistance information into one of the existing Msg3/5 messages. For instance, a new RRC message send over Msg3/Msg5 may be also be defined. In particular, a new message may be added in the list of UL-CCCH-Message, which may accommodate any type of assistance information disclosed herein:

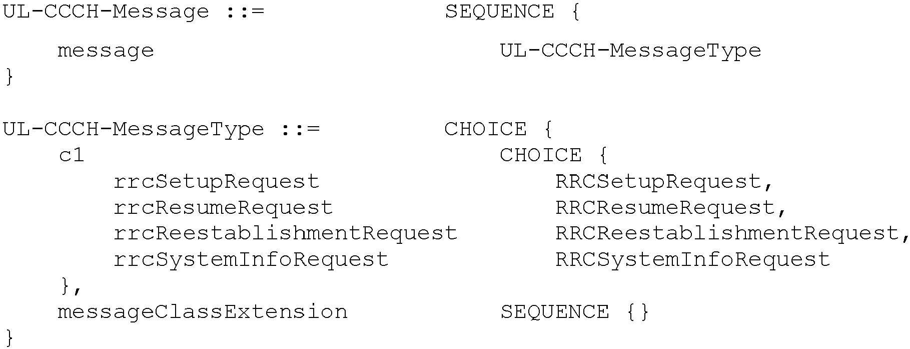

### Control signalling

The control signalling including the LPS indication(s) is generated by the scheduling device 660 (e.g. circuitry 680, in particular LPS circuitry 685 and/or control signalling generation circuitry 820) in Step S925. In the following, different transmission methods for control signalling including LPS indication(s) are disclosed. It is noted that a UE or scheduling device may be able/configured to perform any combination/number of these transmission methods to transmit control signalling including LPS indication(s).

*Air Interface Signaling of LPS indication(s)* - *using system information modification procedure*

In general, the configuration of an LPS may be included in a system information block (SIB). In other words, the control signalling may be a transmission of the SIB including the configuration of the LPS. Such a configuration of the LPS in a SIB may include an indication indicating the resource(s) of the LPS, and/or an indication indicating the activation of the LPS (e.g. whether or not the LPS is active).

It is noted that the transmission of the SIB including an LPS configuration may itself indicate that the LPS is active. In other words, there may be no separate indication of the activation/deactivation of the LPS. More specifically, without such (resource) configuration, or when the configuration is removed from the SIB the LPS is considered as an indication of "deactivation", and the presence of such a configuration in the SIB indicates activation of the LPS. In other words, the SIB may only include only resource configuration of active LPS(s).

In general, a SIBs may be (i) cell-specific,( ii) periodically transmitted, (iii) transmitted on-demand (e.g. per UE request), and/or (iv) always transmitted (as long as the cell is ON).

For instance, assuming the configuration of LP-WUS/LP-SS is in SIBx, the change/activation/deactivation may be performed by modifying the configuration in SIBx.

Using a SIB for the activation, deactivation, and/or resource configuration of LPSs may have a small specification impact.

### Air Interface Signaling of LPS indication(s) - using L1 signalling

The present disclosure is not limited to a transmission of the LPS indication(s) using system information such as a SIB. For instance, cell-common, group common, and/or UE-specific layer 1 (L1) signalings may be used for the transmission of control signalling that includes LPS indication(s). Usage of UE-specific may depend on whether the target UE ID is available at the gNB.

In particular, the control signalling may be
(i) a downlink control information (DCI) signalling,
(ii) a paging early indication (PEI), or
(iii) a paging message.

It is noted that the, the duration and/or periodicity of the LR activation may be fixed (e.g. configured).

For instance, DCI format 2_6 may be used (or reused); and/or a new field or fields may be defined and added to DCI format 2_6. Furthermore, alternatively or in addition, a new DCI format may be defined for the transmission of LPS indication(s).

DCI format 2_7 (PEI) may be used by adding new fields to inform the UE(s) of the activation/deactivation of the LP-WUS/LP-SS and/or of the resources of the LPS.

Paging can be used to inform of the activation/deactivation per cell or registration area. In particular, LPS indication(s) may be included in (i) one of the (normal) paging DCI fields; (ii) the short message of the paging DCI fields, or (iii) the paging message.

In general, a L1 signalling may be associated with a validity time, e.g. a validity starting time and a validity duration. The activation state and resources of the LPS indicated by the L1 signalling may only apply/be valid in this validity time. In other words, the L1 signalling may only indicate (i) the activation state of the LPS in the validity time of the L1 signalling and/or (ii) the resources to be used for the transmission(s) of the LPS that are performed during the validity time of the L1 signalling.

The validity starting time may depend on the time/timing the UE receives the L1 control signaling. The validity period/duration can be either a fixed value or configured value, e.g., in terms of number of DRX cycles. Thus, L1 signalling, in particular DCI signalling, may be used to indicate a different (i.e. different than a current) periodicity or DRX cycle length for a LPS.

Using L1 signalling may allow a more dynamic and flexible change of the LPS configuration. This may allow for a higher UE and network energy saving gain.

*Air Interface Signaling of LPS indication(s)* - *using MAC CE or RRC reconfiguration message*

In general, the control signalling may be a Media Access Control (MAC) control element (CE), or a radio resource control (RRC) reconfiguration message. This may reduce the required specification modifications.

### Network-side Operation and Management of LP-WUS/LP-SS

The scheduling device (e.g. circuitry 680, in particular LPS circuitry 685 and/or ON/OFF determination circuitry 810) may determine (i) to activate or deactivate the LPS, and/or the resource(s) of the LPS. The scheduling device may perform these the determination(s) taking into account/based on assistance information received from UE(s).

However, the present disclosure is not limited thereto. In general, the determination(s) regarding activation/deactivation and resources(s) of LPS(s) may also be performed by the CN. In general, it is also possible that some of these determinations are performed by scheduling devices and some are performed by the CN.

When the CN performs such determination(s), it may subsequently transmit a corresponding indication indicating the result of this determination to the scheduling device(s) (in particular to the scheduling device responsible for the transmission of the LPS to which the respective determination is related). More specifically, the scheduling device (e.g. transceiver 670) may receive, from another scheduling device or a core network an indication indicating one or more of:
- activation or deactivation of the low-power signal, and
- the resource of the low-power signal.

Such an indications may be received by a scheduling device in step S915. The scheduling device may then generate S925 the control signalling and transmit S930 the control signalling in accordance with the received indication(s). In such case, the scheduling device may omit an own/independent the determination step S920 (the scheduling perform a determination of the activation state/resources(s) based on the indication received form the CN (possibly via another scheduling device).

Advantageous options of LP-WUS/LP-SS management and ON/OFF granularity are summarized in the table below:

| | NW awarene ss of LP-WUS capable UE | On/Off of LP-WUS/LP-SS operation by/at network | LP-WUS management | Merits |
|---|---|---|---|---|
| Option 1 | Yes | Per registration area | NAS level (CN level) | Less RAN specification impacts |
| Option 2 | Yes | Per cell | AS level (gNB level) | Less NAS specification impact |
| Option 3 | Yes | Per cell and per registration area | Both NAS and AS | More detailed/dedicated management for better gain (e.g. more power saving) |
| Option 4 | No | Per registration area | | Low complexity. Less specification impact. No UE report/request design. |
| Option 5 | No | Per cell | | Low complexity. More dedicated control than Option 4. |

More specifically, according to Option 1, the determinations on activation status and/or resource(s) are performed only by the CN, but not by scheduling device(s) (gNBs).

According to Option 2, determinations on activation status and/or resource(s) are performed by the scheduling device (gNBs). In particular, according to Option 2, the CN may not be involved in the LPS management.

According to Option 3, determinations on activation status and/or resource(s) are performed by both the CN and scheduling device(s) (gNBs).

According to Option 4, the scheduling device(s) determine the activation status and/or resource(s) for their respective cells without usage of assistance information.

According to Option 5, the CN determine the activation status and/or resource(s) for a registration area without usage of assistance information and, inform the scheduling device(s) responsible for a cell of said registration area accordingly.

It is noted that all of the above Options 1 to 5 can be applied to any type of LPS indication(s) by the gNB, in particular to any way of transmitting the LPS indication(s) disclosed herein. Furthermore, Options 1 to 3 may be combined to any type of assistance information and way of transmitting/provision of assistance information disclosed herein. Options 4 and 5 assume that no assistance information is provided by the UE(s).

If assistance information is only exchanged within AS domain, i.e., between UE and gNB and between gNBs, the LP-WUS operation management does not require NAS signaling (since it is at AS/gNB level). If assistance information is exchanged also in NAS domain, i.e., also between gNB(s) and core network (CN), the LP-WUS operation management may require NAS signaling (since it is NAS/CN level) Combination of the two is also possible, as per Option 3.

### Per cell and/or per registration area management

In general, the LPS operation may be managed e.g. per UE, per UE group, per cell, or per registration area.

In particular, (when managed per cell) the LP-WUS may indicate whether communication devices in a cell are to stop the LR operation (e.g. each/all communication device in said cell, in other words, the LP-WUS may apply to all UEs in the cell of the scheduling device). Furthermore, (when managed per cell) the LP-SS may to be monitored by (each/all) communication devices in a cell when performing the LR operation. Accordingly, the scheduling device may determine:
- when determining to activate the LPS, to start supporting the LR operation for communication devices in an (entire) cell of the scheduling device (it may also determine therewith to switch the cell ON); and
   when determining to deactivate the LPS, to stop supporting the LR operation for the communication devices in an (entire) cell (it may also determine therewith to switch the cell OFF).

When LP-WUS/SS can be ON/OFF per cell, activation/deactivation signaling, e.g., paging message, can be potentially different cell by cell.

Furthermore, (when managed per registration area) the LP-WUS may indicate whether communication devices in a registration area are to stop the LR operation (e.g. each/all communication device in said registration area, in other words, the LP-WUS may apply to all UEs in a registration area). Furthermore, (when managed per cell) the LP-SS may to be monitored by (each/all) communication devices in a registration area when performing the LR operation. In general, a registration area is a group of one or more cells. When LP-WUS/SS can be ON/OFF per registration area, activation/deactivation signaling, e.g., paging message, would be same for all the cells within the same registration area. Accordingly, the LP-WUS indicate whether communication devices in a group of cells including a cell of the scheduling device are to stop the LR operation; and/or the LP-SS may to be monitored by the communication devices in said in a group of cells when performing the LR operation.

When the LP-WUS/LP-SS is managed per registration area, the determination(s) regarding activation/deactivation and resources(s) of LPS(s) are usually performed by the CN, e.g. based on assistance information provided by the gNBs. The scheduling device/gNB then receives such indication (S915), generates (S925) the control signalling in accordance with such indication received from the other scheduling device or the core network, and informs (S930) the UE(s).

### Network Side Coordination and/or Information Exchange

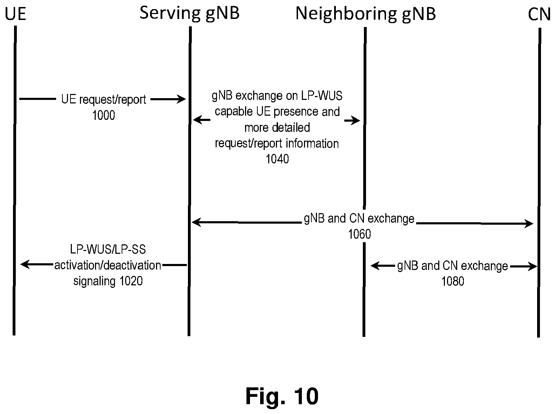

The scheduling device 660 (e.g. transceiver 670) may transmit (e.g. when adopting Option 1 or 3 above)assistance information to other scheduling device(s) and/or the core network (CN). This is illustrates in **Fig. 10**, which shows possible information and signalling exchange between UE(s), gNB(s), and the CN. It is noted that not all of the signaling shown in Fig.10 may be provided. The UE requests/reports 1000 correspond to the assitance information explained above, and the LPS-WUS/LP-SS activation/deactivation 1020 to the LPS indication(s) also already explained above.

As shown in Fig. 10, there may be information exchange 1040 is between gNBs (e.g. S1/X2 signaling). Such information exchange 1040 between gNBs may in particular be performed between scheduling device(s) of neighboring cells in order to exchange assistance information received by the scheduling devices from UE(s) their respective cells. In particular, detailed request/report information received from UE(s) can be forwarded from source cells (e.g. from the cell of the UE that transmitted the capability and/or measurement report) to neighboring cells (e.g. to a cell near/neighboring said source cell). In other words, the scheduling device of the source cell may transmit the assistance information to the scheduling device(s) of the neighboring cell(s).

In general, the assistance information transmitted by a scheduling device may be or include any combination of assistance information that may be provided by a UE to a scheduling device as described above.

As also shown in Fig. 10, there may (additionally or alternatively) be information exchange 1060 and 1080 between a gNB and the CN (e.g. NAS signaling).

In particular, the scheduling device may transmit (as assistance information or as part of the assistance information), to other scheduling device(s) and/or the core network (CN), signalling indicating one or more of (i.e. any combination of):
- a current activation-deactivation status of an LPS. In other words, whether the/an LPS is active or inactive at a given time (e.g. at the time when the scheduling device transmits the assistance information including this indication). In particular: whether, how many, and/or which LPS(s) the scheduling device is transmitting in one, each, or any of its cell(s)) may be indicated;
- an indication of a time at which an LPS will be activated or deactivated. In particular, the time, an indication of a time, and/or information related to the time at which an activation/deactivation is to be performed/planned in the source cell (i.e. the cell of the scheduling device transmitting the assistance information including this indication); .
- information on a capability of one or more communication devices in a cell of the scheduling device to perform the LR operation;
- an activation or deactivation request requesting the activation of the LPS. Such a request may be triggered by an activation/deactivation request received from a communication device and essentially be a forwarding of a UE activation/deactivation request. Alternatively, a scheduling device may transmit an activation request only when the number of activation requests that have been received from different UE(s) exceeds the number of received activation requests by a certain (e.g. predetermined or preconfigured) number (and vice versa for a deactivation request).
- a report including information on a measurement of reference signal(s) performed by a communication device.

In other words, a scheduling device may forward or report on assistance information received from UE(s) to other scheduling device(s) or to the CN. Other scheduling device(s) may serve as relays to further forward the assistance information to the CN and/or use the assistance information for own determination (such as whether to activate a LPS in one of its own cells).

When forwarding or reporting on assistance information a scheduling device may, optionally, include an ID or indication of an ID of the UE from which it received the assistance information into the forwarded assistance information. A scheduling device may also forwarded assistance information received from multiple UE(s) together (possibly together with an indication of an UE ID for each forwarded assistance information). Instead of including the (indication of the) ID of a UE, a (indication of a) group ID of the UE may be included. In particular, assistance information received from UEs of a particular UE group may be transmitted together with the ID of said group.

The scheduling device may only forward part of the assistance information received from multiple UE(s) to other scheduling device(s) and/or the CN. In particular, more abstractive information on presence/existence of LP-WUS/LP-SS/LR operation capable UEs may be transmitted.

For instance, a scheduling device may receive capability reports from one or a plurality of UE(s); and transmit to, the other scheduling device(s) and/or the CN: (i) an indication indicating the (total) number of UE(s) (e.g. in a serving cell of the transmitting scheduling device) that are capable to perform the LR operation, or (ii) an indication indicating that at least a certain (e.g. predetermined or preconfigured) number of UE(s) (e.g. among the UE(s) in a serving cell of the transmitting scheduling device) are capable to perform the LR operation. In particular, the assistance information indicated to other scheduling devices and/or the CN, may indicate whether or not there is at least one LR operation-capable UE in the source cell.

In particular, UE capability, presence/existence, and mobility related information may be beneficial for the network to manage the LP-WUS/LP-SS operation in a larger coverage area. The exchange of such information and decide (using the exchanged information) whether/when to activate/deactivate LP-WUS/LP-SS may allow for better UE power and network energy saving gain.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

### Further Aspects

According to a first aspect, a communication device is provided. The communication device comprises a transceiver and circuitry. The transceiver, in operation, receives a control signalling. The circuitry, in operation, obtains from the control signalling one or more of: (i) an indication indicating activation or deactivation of a low-power signal related to a low-power radio (LR) operation, and (ii) an indication indicating a resource (or resources) of the low-power signal. The low-power signal is: (i) a low-power wake-up signal (LP-WUS) indicating whether the communication device is to stop the LR operation; or (ii) a low-power synchronization signal, (LP-SS) to be monitored by the communication device when performing the LR operation.

According to a second aspect provided in addition to the first aspect, the circuitry, in operation, determines, in accordance with the control signalling, one or more of: (i) whether to monitor the low-power signal, (ii) the resource(s) of the low-power signal, (iii) tracking of one or more reference or synchronization signals, (iv) monitoring of one or more downlink signals and/or downlink channels, and (v) transmission of one or more uplink signals and/or in one or more uplink channels.

According to a third aspect provided in addition to the first or the second aspect, the transceiver, in operation, transmits: (i) an activation request requesting the activation of the low-power signal; (ii) a deactivation request requesting the deactivation of the low-power signal; (iii) a report including information on a measurement of a reference signal performed by the communication device; and/or (iv) a capability signalling indicating a capability of the communication device to perform the LR operation.

According to a fourth aspect provided in addition to the third aspect, the information on the measurement includes one or more of: (i) an indication of a result of the measurement; (ii) an indication indicating whether the measurement has been performed during (a) the LR operation, (b) a main radio (MR) operation of the communication device, or (c) a combination of the LR and the MR operation; (iii) an indication of a time at which the measurement has been performed; (iv) an indication of a location at which the measurement has been performed; (v) an indication whether measurements of the reference signal are getting larger or smaller; (vi) an indication indicating a cell for which the measurement is performed; (vii) an indication indicating: (a) whether the communication device is moving away from a cell center, (b) whether the communication device is moving towards a cell center, and/or (c) whether the communication device is stationary; and (viii) an indication of a velocity vector of the communication device.

According to a fifth aspect, provided in addition to the third or the fourth aspect, the transceiver, in operation, transmits the activation request, the deactivation request, the report, and/or the capability signalling using: (i) configured Physical Uplink Control Channel (PUCCH) resources; (ii) configured Physical Random Access Channel (PRACH) resources; (iii) a radio resource control (RRC) message; (iv) a Media Access Control (MAC) control element (CE); or a Random Access Channel (RACH) procedure signalling.

According to a sixth aspect, provided in addition to the fifth aspect, the transceiver, in operation, transmits the activation request, the deactivation request, the report, and/or the capability signalling using message 3 (Msg3) or message 5 (Msg5) of the RACH procedure signalling.

According to a seventh aspect provided in addition the sixth aspect, the transceiver, in operation, transmits the activation request, the deactivation request, the report, and/or the capability signalling: (i) in a RRCSystemlnfoRequest message in message 3 (Msg3) of a RACH procedure, or (ii) in a RRCSetupRequest message in Msg3 of the RACH procedure.

According to an eighth aspect provided in addition to any of the first to the seventh aspect, a configuration of the low-power signal is included in a system information block (SIB); the control signalling is a transmission of the SIB; and the configuration of the low-power signal: (i) indicates the activation of the low-power signal; and (ii) includes the indication indicating the resource of the low-power signal.

According to a ninth aspect provided in addition to any of the first to the seventh aspect, the control signalling is: (i) a downlink control information (DCI) signalling, (ii) a paging early indication (PEI), (iii) a paging message, (iv) the control signalling is a Media Access Control (MAC) control element (CE), (v) or a radio resource control (RRC) reconfiguration message.

According to a tenth aspect, a scheduling device is provided. The scheduling device comprises circuitry and a transceiver. The circuitry, in operation, generates a control signalling including an indication indicating one or more of: (i) activation or deactivation of the low-power signal related to a low-power radio (LR) operation, and (ii) a resource (or resources) of the low-power signal. The transceiver, in operation, transmits the control signalling. The low-power signal is: (i) a low-power wake-up signal (LP-WUS) indicating whether a communication device is to stop a LR operation; or (ii) a low-power synchronization signal (LP-SS) to be monitored by the communication device when performing the LR operation.

According to a eleventh aspect provided in addition to the tenth aspect, the circuitry, in operation, determines, one or more of: (i) whether to transmit the low-power signal, (ii) the resource(s) of the low-power signal, (iii) whether to transmit of one or more reference or synchronization signals, (iv) whether to transmit one or more downlink signals and/or in one or more downlink channels, and (v) whether to receive one or more uplink signals and/or in one or more uplink channels.

According to an twelfth aspect provided in addition to the tenth or the eleventh aspect, the transceiver, in operation, receives, from the communication device: (i) an activation request requesting the activation of the low-power signal; (ii) a deactivation request requesting the deactivation of the low-power signal; (iii) a report including information on a measurement of a reference signal performed by the communication device; and/or (iv) a capability signalling indicating a capability of the communication device to perform the LR operation.

According to a thirteenth aspect provided in addition to the twelfth aspect, the information on the measurement includes one or more of: (i) an indication of a result of the measurement; (ii) an indication indicating whether the measurement has been performed during (a) the LR operation, (b) a main radio (MR) operation of the communication device, or (c) a combination of the LR and the MR operation; (iii) an indication of a time at which the measurement has been performed; (iv) an indication of a location at which the measurement has been performed; (v) an indication whether measurements of the reference signal are getting larger or smaller; (vi) an indication indicating a cell for which the measurement is performed; (vii) an indication indicating: (a) whether the communication device is moving away from a cell center, (b) whether the communication device is moving towards a cell center, and/or (c) whether the communication device is stationary; and (viii) an indication of a velocity vector of the communication device.

According to a fourteenth aspect, provided in addition to the twelfth or the thirteenth aspect, the transceiver, in operation, receives the activation request, the deactivation request, the report, and/or the capability signalling using: (i) configured Physical Uplink Control Channel (PUCCH) resources; (ii) configured Physical Random Access Channel (PRACH) resources; (iii) a radio resource control (RRC) message; (iv) a Media Access Control (MAC) control element (CE); or a Random Access Channel (RACH) procedure signalling.

According to a fifteenth aspect, provided in addition to the fourteenth aspect, the transceiver, in operation, received the activation request, the deactivation request, the report, and/or the capability signalling using message 3 (Msg3) or message 5 (Msg5) of the RACH procedure signalling.

According to a sixteenth aspect provided in addition the fifteenth aspect, the transceiver, in operation, receives the activation request, the deactivation request, the report, and/or the capability signalling: (i) in a RRCSystemlnfoRequest message in message 3 (Msg3) of a RACH procedure, or (ii) in a RRCSetupRequest message in Msg3 of the RACH procedure.

According to a seventeenth aspect provided in addition to any of the tenth to the sixteenth aspect, a configuration of the low-power signal is included (e.g. by the scheduling device when generating the SIB) in a system information block (SIB); the control signalling is a transmission of the SIB (e.g. transmitted by the scheduling device); and the configuration of the low-power signal: (i) indicates the activation of the low-power signal; and (ii) includes the indication indicating the resource of the low-power signal.

According to an eighteenth aspect provided in addition to any of the tenth to the sixteenth aspect, the control signalling is: (i) a downlink control information (DCI) signalling, (ii) a paging early indication (PEI), (iii) a paging message, (iv) the control signalling is a Media Access Control (MAC) control element (CE), (v) or a radio resource control (RRC) reconfiguration message.

According to a nineteenth aspect, provided in addition to any of the tenth to the eighteenth aspect, the circuitry, in operation, determines: (i) to activate or deactivate the low-power signal, and/or (ii) the resource of the low-power signal.

According to a 20th aspect, provided in addition to the nineteenth aspect, the circuitry, in operation, determines: (i) when determining to activate the low-power signal, to start supporting the LR operation for communication devices in a cell of the scheduling device; and (ii) when determining to deactivate the low-power signal, to stop supporting the LR operation for the communication devices. In particular, the LP-WUS indicates whether the communication devices are to stop the low-LR operation; and the LP-SS is to be monitored by the communication devices when performing the LR operation.

According to a 21st aspect, provided in addition to any of the tenth to the 20th aspect, the transceiver, in operation, receives, from another scheduling device or a core network an indication indicating one or more of: (i) activation or deactivation of the low-power signal, and (ii) the resource of the low-power signal. Furthermore, the LP-WUS indicates whether communication devices in a group of cells including a cell of the scheduling device are to stop the LR operation; and the LP-SS is to be monitored by the communication devices when performing the LR operation. The circuitry, in operation, generates the control signalling in accordance with the indication received from the other scheduling device or the core network.

According to a 22nd aspect, provided in addition to any of the tenth to the 21st aspect, the transceiver, in operation, transmits to another scheduling device and/or a core network signalling indicating one or more of: (i) a current activation-deactivation status of the low-power signal; (ii) indication of a time at which the low-power signal will be activated or deactivated; (iii) information on a capability of one or more communication devices in a cell of the scheduling device to perform the LR operation; (iv) an activation request requesting the activation of the low-power signal; and (v) a report including information on a measurement of a reference signal performed by a communication device.

According to a 23rd aspect, a method for a communication device is provided. The method includes the steps of: (i) receiving a control signalling; and (ii) obtaining, from the control signalling one or more of: (a) an indication indicating activation or deactivation of a low-power signal related to a low-power radio (LR) operation, and (b) an indication indicating a resource of the low-power signal. The low-power signal is: (i) a low-power wake-up signal (LP-WUS), indicating whether the communication device is to stop the LR operation; or (ii) a low-power synchronization signal (LP-SS) to be monitored by the communication device when performing the LR operation.

Further (dependent) aspects are provided for the method according to the 23rd aspect, corresponding to the steps performed in operation by the communication device, provided by any of the first to the ninth aspect.

According to a 24th aspect, a method for a scheduling device is provided. The method includes a step of generating a control signalling including an indication indicating one or more of: (i) activation or deactivation of a low-power signal related to a low-power radio (LR) operation, and (ii) a resource of the low-power signal. The low-power signal is: (i) a low-power wake-up signal (LP-WUS), indicating whether a communication device is to stop a LR operation; or (ii) a low-power synchronization signal (LP-SS), to be monitored by the communication device when performing the LR operation. Furthermore, the method includes a step of transmitting the control signalling.

Further (dependent) aspects are provided for the method according to the 24th aspect, corresponding to the steps performed in operation by the scheduling device, provided by any of the tenth to the 22nd aspects.

According to a 25th aspect, an integrated circuit is provided (that may be deployed in e.g. a communication device, in particular a user equipment). The integrated circuit, in operation, controls a process of a communication device, the process including the steps of: (i) receiving a control signalling; and (ii) obtaining, from the control signalling one or more of: (a) an indication indicating activation or deactivation of a low-power signal related to a low-power radio (LR) operation, and (b) an indication indicating a resource of the low-power signal. The low-power signal is: (i) a low-power wake-up signal (LP-WUS), indicating whether the communication device is to stop the LR operation; or (ii) a low-power synchronization signal (LP-SS) to be monitored by the communication device when performing the LR operation.

For instance, the integrated circuit according to the 25th aspect may comprise: an interface to a transceiver capable of receiving and transmitting signals; and circuitry configured (by hardware or software) to perform: (i) configuring (or controlling), via said interface, the transceiver to receive a control signalling; and (ii) obtaining, from the control signalling (e.g. received via said interface from the transceiver) one or more of: (a) an indication indicating activation or deactivation of a low-power signal related to a low-power radio (LR) operation, and (b) an indication indicating a resource of the low-power signal. The low-power signal is: (i) a low-power wake-up signal (LP-WUS), indicating whether the communication device is to stop the LR operation; or (ii) a low-power synchronization signal (LP-SS) to be monitored by the communication device when performing the LR operation.

The integrated circuit of the 25th aspect may further implement the corresponding features of any of the any of the first to the ninth aspect.

According to a 26th aspect, an integrated circuit is provided (that may be deployed in a scheduling device, in particular a base station or gNB). The integrated circuit, in operation, controls a process of a scheduling device, the process including the steps of: generating a control signalling including an indication indicating one or more of: (i) activation or deactivation of a low-power signal related to a low-power radio (LR) operation, and (ii) a resource of the low-power signal. The low-power signal is: (i) a low-power wake-up signal (LP-WUS), indicating whether a communication device is to stop a LR operation; or (ii) a low-power synchronization signal (LP-SS), to be monitored by the communication device when performing the LR operation. Furthermore, the method includes a step of transmitting the control signalling.

For instance, the integrated circuit according to the 26th aspect may comprise: an interface to a transceiver capable of receiving and transmitting signals; and circuitry configured (by hardware or software) to perform: (a) generating control signalling including an indication indicating one or more of: (i) activation or deactivation of a low-power signal related to a low-power radio (LR) operation, and (ii) a resource of the low-power signal; and (b) configuring (or controlling), via said interface, the transceiver to transmit the control signalling. The low-power signal is: (i) a low-power wake-up signal (LP-WUS), indicating whether a communication device is to stop a LR operation; or (ii) a low-power synchronization signal (LP-SS), to be monitored by the communication device when performing the LR operation.

The integrated circuit of the 26th aspect may further implement the corresponding features of any of the tenth to the 22nd aspects.

According to a 27th aspect, a program stored on a (non-transitory) storage medium and including code instructions, which, when executed on one or more processors of a user equipment, cause the one or more processors to execute the steps of any of the above mentioned methods (the 22nd and the 23rd aspects and their respective further aspects).

Summarizing, the present disclosure relates to a communication device, a scheduling device and respective methods for a communication device and a scheduling device. For example, the communication device comprises a transceiver and circuitry. The transceiver receives a control signalling, and the circuitry obtains from the control signalling one or more of: (i) an indication indicating activation or deactivation of a low-power signal related to a low-power radio, LR, operation, and (ii) an indication indicating a resource of the low-power signal. The low-power signal is: (i) a low-power wake-up signal, LP-WUS, indicating whether the communication device is to stop the LR operation; or (ii) a low-power synchronization signal, LP-SS, to be monitored by the communication device when performing the LR operation.

## Claims

1. A communication device comprising:
a transceiver which, in operation, receives a control signalling; and
circuitry which, in operation, obtains from the control signalling an indication indicating activation of a low-power signal related to a low-power radio, LR, operation, wherein
the low-power signal is a low-power wake-up signal, LP-WUS, indicating whether the communication device is to stop the LR operation.

2. The communication device according to claim 1, wherein
the circuitry, in operation, determines, in accordance with the control signalling, one or more of:
- whether to monitor the low-power signal,
- the resource of the low-power signal,
- tracking of one or more reference or synchronization signals,
- monitoring of one or more downlink signals and/or downlink channels, and
- transmission of one or more uplink signals and/or uplink channels.

3. The communication device according to claim 1 or 2, wherein
the transceiver, in operation, transmits:
- an activation request requesting the activation of the low-power signal;
- a deactivation request requesting the deactivation of the low-power signal;
- a report including information on a measurement of a reference signal performed by the communication device; and/or
- a capability signalling indicating a capability of the communication device to perform the LR operation.

4. The communication device according to claim 3, wherein
the information on the measurement includes one or more of:
- an indication of a result of the measurement;
- an indication indicating whether the measurement has been performed during the LR operation, a main radio, MR, operation of the communication device, or a combination of the LR and the MR operation;
- an indication of a time at which the measurement has been performed;
- an indication of a location at which the measurement has been performed;
- an indication whether measurements of the reference signal are getting larger or smaller;
- an indication indicating a cell for which the measurement is performed;
- an indication indicating:
∘ whether the communication device is moving away from a cell center,
∘ whether the communication device is moving towards a cell center, and/or
∘ whether the communication device is stationary; and
- an indication of a velocity vector of the communication device.

5. The communication device according to claim 3 or 4, wherein
the transceiver, in operation, transmits the activation request, the deactivation request, the report, and/or the capability signalling using:
- configured Physical Uplink Control Channel, PUCCH, resources,
- configured Physical Random Access Channel, PRACH, resources,
- a radio resource control, RRC, message,
- a Media Access Control, MAC, control element, CE, or
- a RACH procedure signalling.

6. The communication device according to claim 5, wherein
the transceiver, in operation, transmits the activation request, the deactivation request, the report, and/or the capability signalling using message 3, Msg3, or message 5, Msg5, of the RACH procedure signalling.

7. The communication device according to claim 6, wherein
the transceiver, in operation, transmits the activation request, the deactivation request, the report, and/or the capability signalling:
- in a RRCSystemlnfoRequest message in message 3, Msg3, of a RACH procedure, or
- in a RRCSetupRequest message in Msg3 of the RACH procedure.

8. The communication device according to any of claims 1 to 7, wherein
a configuration of the low-power signal is included in a system information block, SIB; the control signalling is a transmission of the SIB; and
the configuration of the low-power signal:
- indicates the activation of the low-power signal; and
- includes the indication indicating the resource of the low-power signal.

9. The communication device according to any of claims 1 to 7, wherein
the control signalling is:
- a downlink control information, DCI, signalling,
- a paging early indication, PEI,
- a paging message,
- the control signalling is a Media Access Control, MAC, control element, CE, or
- a radio resource control, RRC, reconfiguration message.

10. A scheduling device comprising:
circuitry which, in operation, generates a control signalling including an indication indicating activation of the low-power signal related to a low-power radio, LR, operation; and
a transceiver which, in operation, transmits the control signalling; wherein
the low-power signal is a low-power wake-up signal, LP-WUS, indicating whether a communication device is to stop a LR operation.

11. The scheduling device according to claim 10, wherein
the transceiver, in operation, receives, from the communication device:
- an activation request requesting the activation of the low-power signal;
- a deactivation request requesting the deactivation of the low-power signal;
- a report including information on a measurement of a reference signal performed by the communication device; and/or
- a capability signalling indicating a capability of the communication device to perform the LR operation.

12. The scheduling device according to claim 10 or 11, wherein
the circuitry, in operation, determines:
- to activate or deactivate the low-power signal, and/or
- the resource of the low-power signal.

13. The scheduling device according to claim 12, wherein
the circuitry, in operation, determines:
- when determining to activate the low-power signal, to start supporting the LR operation for communication devices in a cell of the scheduling device; and
- when determining to deactivate the low-power signal, to stop supporting the LR operation for the communication devices; wherein
the LP-WUS indicates whether the communication devices are to stop the low-LR operation; and
the LP-SS is to be monitored by the communication devices when performing the LR operation.

14. The scheduling device according to any of claims 10 to 13, wherein
the transceiver, in operation, receives, from another scheduling device or a core network an indication indicating one or more of:
- activation or deactivation of the low-power signal, and
- the resource of the low-power signal; wherein
the LP-WUS indicates whether communication devices in a group of cells including a cell of the scheduling device are to stop the LR operation; and
the LP-SS is to be monitored by the communication devices when performing the LR operation; and
the circuitry, in operation, generates the control signalling in accordance with the indication received from the other scheduling device or the core network.

15. The scheduling device according to any of claims 10 to 14, wherein
the transceiver, in operation, transmits to another scheduling device and/or a core network signalling indicating one or more of:
- a current activation-deactivation status of the low-power signal;
- indication of a time at which the low-power signal will be activated or deactivated;
- information on a capability of one or more communication devices in a cell of the scheduling device to perform the LR operation;
- an activation request requesting the activation of the low-power signal; and
- a report including information on a measurement of a reference signal performed by a communication device.
